# EUROPÄISCHE PATENTSCHRIFT

(11) **EP 4 251 876 B1**
(45) Veröffentlichungstag und Bekanntmachung des Hinweises auf die Patenterteilung: **24.09.2025**
(21) Anmeldenummer: 21823730.3
(22) Anmeldetag: 29.11.2021
(51) Int. Cl.: F03D 80/50, F03D 80/70, F16C 17/10, F16C 23/04, F16C 43/02, F16C 33/26

(54) **GLEITLAGERUNG, SOWIE EINE MIT DER GLEITLAGERUNG AUSGESTATTETE GONDEL FÜR EINE WINDKRAFTANLAGE**
PLAIN BEARING ARRANGEMENT AND NACELLE EQUIPPED WITH A PLAIN BEARING ARRANGEMENT FOR A WIND TURBINE
AGENCEMENT DE PALIER LISSE ET NACELLE ÉQUIPÉE D'UN AGENCEMENT DE PALIER LISSE POUR UNE ÉOLIENNE

(30) Priorität: 30.11.2020 AT 510442020; 08.04.2021 AT 502592021
(43) Veröffentlichungstag der Anmeldung: 04.10.2023
(73) Patentinhaber: Miba Gleitlager Austria GmbH, 4663 Laakirchen (AT)
(72) Erfinder: ZEH, Christopher, 37434 Obernfeld (DE); LAUBICHLER, Patrick, 4810 Gmunden (AT); WALDL, Albert, 4663 Laakirchen (AT); HÖLZL, Johannes, 4880 Berg im Attergau (AT)
(74) Vertreter: Burger, Hannes
(86) Internationale Anmeldenummer: PCT/AT2021/060451
(87) Internationale Veröffentlichungsnummer: WO 2022/109648

(56) Entgegenhaltungen:
- EP-A1- 3 252 306
- EP-A1- 3 260 715
- EP-A1- 3 489 548
- WO-A1-2015/184022
- WO-A1-2020/176919
- DE-C- 531 749
- DE-C- 650 737
- DE-C- 678 930
- FR-A- 1 464 065
- FR-A1- 2 786 544
- GB-A- 486 220

## Beschreibung

Die Erfindung betrifft eine Gleitlagerung, sowie eine mit der Gleitlagerung ausgestattete Gondel für eine Windkraftanlage und eine Windkraftanlage.

Aus der WO 2011/127510 A1 ist ein Lagerelement für die Lagerung der Rotornabe einer Windkraftanlage bekannt.

Weitere Lagerelemente sind aus der WO 2020/176919 A1, der DE 678 930 C und der GB 486 220 A gemäß dem Oberbegriff des Anspruchs 1 bekannt.

Aufgabe der vorliegenden Erfindung war es, eine verbesserte Gleitlagerung zur Verfügung zu stellen.

Diese Aufgabe wird durch eine Vorrichtung gemäß den Ansprüchen gelöst.

Erfindungsgemäß ist eine Gleitlagerung nach Anspruch 1 ausgebildet. Die Gleitlagerung umfasst:
- ein inneres Ringelement;
- ein äußeres Ringelement;
- zumindest ein Gleitlagerelement, welches zwischen dem inneren Ringelement und dem äußeren Ringelement angeordnet ist,

wobei eine Lagerfläche des Gleitlagerelementes und eine Gegenfläche des äußeren Ringelements aneinander anliegen,
wobei das Gleitlagerelement zumindest zwei Gleitlagerpads umfasst, wobei die einzelnen Gleitlagerpads jeweils eine in Axialrichtung gesehen gewölbte Lagerfläche aufweisen, und
wobei im äußeren Ringelement eine Entnahmeöffnung ausgebildet ist, welche ausgehend von einer ersten Stirnseite des äußeren Ringelementes die Gegenfläche des äußeren Ringelements unterbricht.

Insbesondere kann vorgesehen sein, dass die Lagerfläche nach außen gewölbt ist. Mit anderen Worten ausgedrückt, kann die Lagerfläche konvex ausgebildet sein.

Die erfindungsgemäße Gleitlagerung weist den Vorteil auf, dass sie durch die erfindungsgemäße Bauweise sowohl zur Aufnahme von Axialkräften als auch zur Aufnahme von Radialkräften ausgebildet ist.

Weiters kann vorgesehen sein, dass ein Scheitelpunkt der Lagerfläche den größten Radialabstand der Lagerfläche zu einer Rotationsachse aufweist.

Weiters kann es zweckmäßig sein, wenn die einzelnen Gleitlagerpads in einem Kugelkalottenabschnitt die Grundform einer Kugelkalotte mit einem Kugelkalottenradius aufweisen und in einem Übergangsabschnitt einen Übergangsradius aufweisen.

In einer ersten Ausführungsvariante kann vorgesehen sein, dass der Übergangsradius kleiner ist, als der Kugelkalottenradius. Dies bringt den Vorteil mit sich, dass der Kugelkalottenabschnitt zur Aufnahme der Radialkräfte bzw. der in einer ersten Richtung wirkenden Axialkräfte ausgebildet sein kann. Der Übergangsabschnitt kann zur Aufnahme von in einer zweiten Richtung wirkenden Axialkräften ausgebildet sein. Die in der ersten Richtung wirkenden Axialkräfte können hierbei größer sein, als die in der zweiten Richtung wirkenden Axialkräfte.

Weiters kann vorgesehen sein, dass der Übergangsradius und der Kugelkalottenradius gleich groß sind.

Ferner kann vorgesehen sein, dass sich der Kugelkalottenabschnitt bis zu einem Scheitelpunkt erstreckt und der Übergangsabschnitt im Scheitelpunkt an den Kugelkalottenabschnitt anschließt. Ein derart ausgebildetes Gleitlager weist eine überraschend hohe Lebensdauer auf. Darüber hinaus kann vorgesehen sein, dass der Übergangsabschnitt tangential in den Kugelkalottenabschnitt überläuft. Besonders ein derart ausgebildetes Gleitlager weist überraschend gute Gleiteigenschaften auf.

Vorteilhaft ist auch eine Ausprägung, gemäß welcher vorgesehen sein kann, dass der Scheitelpunkt in einem Abstand von einer zweiten Stirnseite des Gleitlagerpads angeordnet ist, wobei der Abstand zwischen 1% und 49%, insbesondere zwischen 5% und 35%, bevorzugt zwischen 10% und 25% einer Axialerstreckung des Gleitlagerpads beträgt. Besonders bei einer derart ausgestalteten Gleitlagerung können hohe Radialkräfte bzw. hohe Axialkräfte in einer ersten Richtung aufgenommen werden.

Erfindungsgemäß ist vorgesehen, dass im äußeren Ringelement eine Entnahmeöffnung ausgebildet ist, welche ausgehend von einer ersten Stirnseite des äußeren Ringelementes die Gegenfläche des äußeren Ringelements unterbricht. Dies bringt den Vorteil mit sich, dass durch diese Maßnahme die einzelnen Gleitlagerpads einfach zu wechseln sind, ohne dass dazu die komplette Gleitlagerung in ihre Einzelteile zerlegt werden muss. Insbesondere ist es denkbar, dass durch diese Maßnahme erreicht wird, dass die einzelnen Gleitlagerpads im verbauten Zustand der Gleitlagerung gewechselt werden können, ohne diese komplett zerlegen zu müssen. Weiters kann vorgesehen sein, dass sich die Entnahmeöffnung von einer ersten Stirnseite des äußeren Ringelementes zumindest bis zum Scheitelpunkt des Gleitlagerelementes erstreckt.

Weiters ist es denkbar, dass im Betriebszustand des Gleitlagers in der Entnahmeöffnung ein poröses Material, wie etwa ein Schwamm angeordnet ist, welches zur temporären Aufnahme von Schmieröl dient. Durch diese Maßnahme kann erreicht werden, dass die Gleitfläche der einzelnen Gleitlagerpads gleichmäßig mit einem Schmierölfilm bedeckt ist.

In einer Weiterbildung kann vorgesehen sein, dass in der Entnahmeöffnung eine Sensorik angeordnet ist, welche zur Erfassung von Betriebszuständen, bzw. Verschleißzuständen des Gleitlagers dient. Eine derartige Sensorik kann beispielsweise ein Temperatursensor, ein Schwingungssensor oder dergleichen sein.

Die einzelnen Gleitlagerpads lassen sich einfach durch die Entnahmeöffnung aus ihrer Betriebsposition entfernen.

Ferner kann es zweckmäßig sein, wenn die Entnahmeöffnung eine Umfangserstreckung aufweist und dass die Gleitlagerpads jeweils eine Umfangserstreckung aufweisen, wobei die Umfangserstreckung der Gleitlagerpads zwischen 60% und 99,9%, insbesondere zwischen 80% und 99%, bevorzugt zwischen 90% und 98% der Umfangserstreckung der Entnahmeöffnung beträgt. Besonders bei einem derartigen Größenverhältnis weist die Entnahmeöffnung eine ausreichende Umfangserstreckung auf, um die einzelnen Gleitlagerpads einfach durch die Entnahmeöffnung hindurch aus der Gleitlagerung herausnehmen zu können. Gleichzeitig ist die Entnahmeöffnung ausreichend klein, um nicht eine Schwächung des äußeren Ringelementes bzw. eine Verminderung der Tragfähigkeit der Gleitlagerung hervor zu rufen.

Darüber hinaus kann vorgesehen sein, dass die Entnahmeöffnung sich zur ersten Stirnseite hin radial aufweitend ausgebildet ist. Dies bringt den Vorteil mit sich, dass das äußere Ringelement eine möglichst hohe Stabilität aufweisen kann und gleichzeitig das Gleitlagerpad möglichst einfach durch die Entnahmeöffnung entfernt werden kann.

Ferner kann vorgesehen sein, dass ein Gleitlagerpadaufnahmering ausgebildet ist, welcher zur Befestigung der Gleitlagerpads dient, wobei der Gleitlagerpadaufnahmering am inneren Ringelement aufgenommen ist. Dies bringt den Vorteil mit sich, dass durch diese Maßnahme die Gleitlagerpads fest mit dem Inneren Ringelement gekoppelt werden können.

Darüber hinaus kann vorgesehen sein, dass der Gleitlagerpadaufnahmering auf das innere Ringelement aufgeschrumpft ist. Besonders für Rotorwellen stellt dies eine äußerst haltbare und praktikable Verbindung dar. Beim Aufschrumpfen wird der Gleitlagerpadaufnahmering erhitzt und/oder das innere Ringelement abgekühlt, um ein axiales Aufpressen zu erleichtern. Nach dem Temperaturausgleich und somit Ausgleich der Wärmedehnungen kann ein fester Sitz des Gleitlagerpadaufnahmeringes auf dem inneren Ringelement erreicht werden.

In einer alternativen Ausführungsvariante oder zusätzlich kann vorgesehen sein, dass der Gleitlagerpadaufnahmering mittels einer Stoffschlüssigen Verbindung, wie etwa einer Schweißverbindung mit dem inneren Ringelement gekoppelt ist.

In wieder einer anderen Ausführungsvariante kann vorgesehen sein, dass der Gleitlagerpadaufnahmering mittels einer formschlüssigen Verbindung, wie etwa einer Schraubverbindung mit dem inneren Ringelement gekoppelt ist. Insbesondere kann vorgesehen sein, dass der Weiters kann vorgesehen sein, dass im Gleitlagerpadaufnahmering mehrere Gewindebohrungen ausgebildet sind, welche in Axialrichtung des Gleitlagerpadaufnahmeringes angeordnet sind und zur Aufnahme von Befestigungsschrauben dienen, wobei in den Gleitlagerpads Durchgangslöcher ausgebildet sind, durch welche die Befestigungsschrauben gesteckt sind, um die Gleitlagerpads mittels der Befestigungsschrauben am Gleitlagerpadaufnahmering zu klemmen. Eine derartige Verbindung zwischen den Gleitlagerpads und dem Gleitlagerpadaufnahmering ist einfach herzustellen.

In einer Weiterbildung kann vorgesehen sein, dass die Gleitlagerpads an deren Innenseite einen Absatz aufweisen, welcher an einer Stirnseite des Gleitlagerpadaufnahmeringes anliegt, wobei die Durchgangslöcher im Bereich des Absatzes angeordnet sind. Durch diese Maßnahme wird eine ausreichend belastbare Verbindung zwischen den Gleitlagerpads und dem Innenring erreicht.

Weiters kann vorgesehen sein, dass eine Wellenmutter ausgebildet ist, welche eine Axialsicherungselementaufnahme aufweist, wobei in der Axialsicherungselementaufnahme je Gleitlagerpad zumindest ein Axialsicherungselement aufgenommen ist, welches zur axialen Fixierung des Gleitlagerpads dient. Dies bringt den Vorteil mit sich, dass durch die Axialsicherungselemente die einzelnen Gleitlagerpads in ihrer Position fixiert werden können. Darüber hinaus kann die Wellenmutter in deren Axialposition einfach eingestellt werden und für die einzelnen Axialsicherungselemente ausreichenden Halt bieten.

In einer alternativen Ausführungsvariante kann auch vorgesehen sein, dass anstatt der Wellenmutter ein Wellenring, welcher beispielsweise aufgepresst werden kann, zur Aufnahme der Axialsicherungselemente dienen kann.

In wieder einer anderen Ausführungsvariante kann anstatt der Wellenmutter die Rotorwelle selbst zur Aufnahme der Axialsicherungselemente dienen und eine entsprechende Formgebung aufweisen.

Gemäß einer besonderen Ausprägung ist es möglich, dass das Axialsicherungselement mittels einer in Radialrichtung wirkenden Befestigungsschraube mit der Wellenmutter gekoppelt ist, wobei das Axialsicherungselement zumindest an einer Axialstirnseite eine sich zur Rotationsachse hin verjüngende Keilfläche aufweist, welche mit einer ersten Gegenkeilfläche korrespondiert, welche an einer ersten Stirnseite des Gleitlagerpads angeordnet ist. Durch diese Maßnahme kann das Axialsicherungselement durch Festzeihen der Befestigungsschraube einen axialen Druck auf das Gleitlagerpad ausüben, wodurch dieses mittels des Axialsicherungselementes geklemmt werden kann.

Weiters kann vorgesehen sein, dass die sich zur Rotationsachse hin verjüngende Keilfläche des Axialsicherungselementes mit einer an der ersten Stirnseite des Gleitlagerelementes ausgebildeten ersten Gegenkeilfläche korrespondiert. Durch diese Maßnahme kann das Gleitlagerpad nicht nur Axial geklemmt werden, sondern kann dieses auch radial geklemmt werden. Darüber hinaus kann durch die verjüngende Form der Keilfläche und durch die entsprechende Gegenform der ersten Gegenkeilfläche eine formschlüssige Verbindung zwischen dem Axialsicherungselement und dem Gleitlagerpad erreicht werden. Insbesondere kann vorgesehen sein, dass die erste Gegenkeilfläche derart ausgebildet ist, dass das Gleitlagerpad an dessen Innenseite eine breite Basis aufweist und sich im Bereich der ersten Gegenkeilfläche nach außen hin verjüngt.

Entsprechend einer vorteilhaften Weiterbildung kann vorgesehen sein, dass die Wellenmutter an deren Außenseite eine Lauffläche für einen Wellendichtring aufweist. Dies bringt den Vorteil mit sich, dass die Wellenmutter gleichzeitig als Gegenbauteil für den Wellendichtring dienen kann. Darüber hinaus kann die für einen Wellendichtring notwendige Oberflächenbeschaffenheit der Lauffläche, beispielsweise eine drallfrei geschliffene Oberfläche, an der Wellenmutter einfacher hergestellt werden, als beispielsweise an einer Rotorwelle. Dadurch kann der Aufbau der Gleitlagerung vereinfacht werden und die Lebensdauer der Gleitlagerung verbessert werden.

Insbesondere kann es vorteilhaft sein, wenn ein Lagerbock ausgebildet ist, in welchem das äußere Ringelement aufgenommen ist, wobei zumindest an einer Axialstirnseite des Lagerbockes ein Deckel ausgebildet ist, wobei im Deckel integriert oder an den Deckel angeschlossen ein Schmierölreservoir ausgebildet ist. Dies bringt den Vorteil mit sich, dass in einem derart ausgebildeten Schmierölreservoir ausreichend Schmieröl für ein hydrodynamisches Gleitlager bevorratet werden kann.

Ferner kann vorgesehen sein, dass ein Axialanschlagring ausgebildet ist. Weiters kann vorgesehen sein, dass zumindest ein Verdrehsicherungselement ausgebildet ist, welches zwischen dem Axialanschlagring und zumindest einem der Gleitlagerpads wirkt. Durch diese Maßnahme kann erreicht werden, dass zumindest eines der Gleitlagerpads gegen Verdrehung relativ zu einer Welle gesichert ist.

Weiters kann vorgesehen sein, dass der Axialanschlagring eine Keilfläche aufweist, welche derart ausgebildet ist, dass eine formschlüssige Verbindung zwischen dem Gleitlagerpad und dem Axialanschlagring erreicht werden kann. Insbesondere kann vorgesehen sein, dass an der zweiten Stirnseite des Gleitlagerpads eine zweite Gegenkeilfläche ausgebildet ist. Insbesondere kann vorgesehen sein, dass die zweite Gegenkeilfläche derart ausgebildet ist, dass das Gleitlagerpad an dessen Innenseite eine breite Basis aufweist und sich im Bereich der zweiten Gegenkeilfläche nach außen hin verjüngt.

Durch die erste Gegenkeilfläche und die zweite Gegenkeilfläche kann bei axialer Klemmung des Gleitlagerpads durch Anlage von Keilflächen an die Gegenkeilflächen, zusätzlich eine radiale Klemmung der Gleitlagerpads bzw. ein radiales Andrücken der Gleitlagerpads an die Rotorwelle erreicht werden. Dies kann insbesondere durch die formschlüssige Verbindung der Keilflächen mit den jeweiligen Gegenkeilflächen erreicht werden.

Weiters kann vorgesehen sein, dass für jedes der Gleitlagerpads ein eigenes Verdrehsicherungselement ausgebildet ist.

Weiters kann vorgesehen sein, dass der Axialanschlagring an der Welle aufgeschrumpft ist. Darüber hinaus kann vorgesehen sein, dass der Axialanschlagring an dessen Außenseite eine Lauffläche für einen Wellendichtring aufweist. Dies bringt den Vorteil mit sich, dass die Wellenmutter gleichzeitig als Gegenbauteil für den Wellendichtring dienen kann. Darüber hinaus kann die für einen Wellendichtring notwendige Oberflächenbeschaffenheit der Lauffläche, beispielsweise eine drallfrei geschliffene Oberfläche, am Axialanschlagring einfacher hergestellt werden, als beispielsweise an einer Rotorwelle. Dadurch kann der Aufbau der Gleitlagerung vereinfacht werden und die Lebensdauer der Gleitlagerung verbessert werden.

Weiters kann vorgesehen sein, dass an der ersten Stirnseite des Gleitlagerpads ein Formelement, insbesondere ein Gewinde, ausgebildet ist, welches zur Aufnahme eines Verbindungselementes dient. Dies bringt den Vorteil mit sich, dass dadurch das Gleitlagerpad vereinfacht mit einer Gleitlagerpadwechselvorrichtung gekoppelt werden kann.

Weiters kann vorgesehen sein, dass an einer zweiten Stirnseite des Gleitlagerpads ein Anlaufringsegment angeordnet ist. Dies bringt den Vorteil mit sich, dass der Kugelkalottenabschnitt zur Aufnahme der Radialkräfte bzw. der in einer ersten Richtung wirkenden Axialkräfte ausgebildet sein kann. Das Anlaufringsegment kann zur Aufnahme von in einer zweiten Richtung wirkenden Axialkräften ausgebildet sein. Die in der ersten Richtung wirkenden Axialkräfte können hierbei größer sein, als die in der zweiten Richtung wirkenden Axialkräfte. Insbesondere kann vorgesehen sein, dass das Anlaufringsegment eine Gleitfläche aufweist, welche mit einer entsprechenden Gegengleitfläche des äußeren Ringelementes zusammenwirkt.

In einer ersten Ausführungsvariante kann vorgesehen sein, dass das Anlaufringsegment mittels Befestigungsmittel, insbesondere mittels Schrauben mit dem Gleitlagerpad gekoppelt ist. Insbesondere kann vorgesehen sein, dass das Anlaufringsegment mittelts zumindest zwei Befestigungsmittel, bevorzugt mittels drei Befestigungsmittel, insbesondere mittels Inbusschrauben mit dem Gleitlagerpad gekoppelt ist. Die Befestigungsmittel können hierbei in einem gleichen Winkelabstand aufgeteilt sein.

In einer weiteren Ausführungsvariante kann vorgesehen sein, dass das Anlaufringsegment einstückig oder einteilig mit dem Gleitlagerpad ausgebildet ist.

Weiters kann vorgesehen sein, dass in Umfangsrichtung gesehen zwischen den einzelnen Gleitlagerpads Abstandhalter angeordnet sind. Dies bringt den Vorteil mit sich, dass die Gleitlagerpads in Position gehalten werden können.

In einer Weiterbildung kann vorgesehen sein, dass die Abstandhalter direkt an den Gleitlagerpads ausgebildet angeordnet sind. In einer alternativen Ausführungsvariante kann vorgesehen sein, dass die Abstandhalter als eigenständige Bauteile ausgebildet sind, welche zwischen den Gleitlagerpads angeordnet werden.

Darüber hinaus kann vorgesehen sein, dass an einer ersten Umfangsseite des Gleitlagerpads im Bereich der Lagerfläche eine Schmieröltransportnut ausgebildet ist. Eine derartige Schmieröltransportnut bringt den Vorteil mit sich, dass mittels der Schmieröltransportnut das Schmieröl vom Schmierölreservoir nach oben befördert werden kann und somit über die Gegenfläche des äußeren Ringelements verteilt werden kann.

Ferner kann vorgesehen sein, dass im Gleitlagerpad an dessen Innenseite eine Aufnahme für eine Hebevorrichtung ausgebildet ist. Dadurch kann die Erstmontage der Gleitlagerpads erleichtert werden.

Erfindungsgemäß ist ein Verfahren zum Wechseln eines Gleitlagerpads einer Gleitlagerung nach Anspruch 1 vorgesehen. Das Verfahren umfasst die Verfahrensschritte:
- Bewegen des zu wechselnden Gleitlagerpads zu der im äußeren Ringelement ausgebildeten Entnahmeöffnung;
- Lösen eines Axialsicherungselementes des zu wechselnden Gleitlagerpads;
- Axiales Entfernen des zu wechselnden Gleitlagerpads durch die Entnahmeöffnung;
- Axiales Einsetzen eines neuen Gleitlagerpads durch die Entnahmeöffnung;
- Fixieren des neuen Gleitlagerpads mittels des Axialsicherungselementes.

Das erfindungsgemäße Verfahren bringt den Vorteil mit sich, dass die einzelnen Gleitlagerpads auch im zusammengebauten Zustand der Gleitlagerung gewechselt werden können. Dadurch kann der Wartungsprozess wesentlich vereinfacht werden.

Erfindungsgemäß ist eine Gondel für eine Windkraftanlage vorgesehen. Die Gondel umfasst:
- ein Gondelgehäuse;
- eine Rotorwelle;
- eine Rotornabe, welche an der Rotorwelle angeordnet ist;
- eine Rotorlagerung zur Lagerung der Rotorwelle am Gondelgehäuse. Die Rotorlagerung umfasst eine Gleitlagerung, welche nach einer der obigen Ausprägungen ausgebildet ist.

Besonders in Gondeln von Windkraftanlagen ist das erfindungsgemäße Gleitlager aufgrund seiner Wartungsfreundlichkeit von Vorteil.

Gemäß einer besonderen Ausprägung ist es möglich, dass die Rotorlagerung einen Lagerbock umfasst, in welchem das äußere Ringelement aufgenommen ist, wobei der Lagerbock einen Axialanschlag für das äußere Ringelement aufweist, wobei der Axialanschlag an einer der Rotornabe abgewandten Axialstirnseite des Lagerbockes ausgebildet ist. Dies bringt den Vorteil mit sich, dass der Axialanschlag in einer Hauptbelastungsrichtung der Rotorlagerung wirkt.

Entsprechend einer vorteilhaften Weiterbildung kann vorgesehen sein, dass im äußeren Ringelement eine Entnahmeöffnung ausgebildet ist, welche sich von einer ersten Stirnseite des äußeren Ringelementes zumindest bis zum Scheitelpunkt des Gleitlagerelementes erstreckt, wobei die Entnahmeöffnung an der zur Rotornabe abgewandten Seite des Lagerbockes ausgebildet ist. Dies bringt den Vorteil mit sich, dass die einzelnen Gleitlagerpads im zusammengebauten Zustand der Gondel zum Austausch der einzelnen Gleitlagerpads einfach entnommen werden können.

Insbesondere kann es vorteilhaft sein, wenn der Axialanschlag im Bereich der Entnahmeöffnung des äußeren Ringelementes eine Ausnehmung aufweist, welche mit der Entnahmeöffnung korrespondiert. Dies bringt den Vorteil mit sich, dass die einzelnen Gleitlagerpads einfach eingebaut bzw. ausgebaut werden können.

In einer alternativen Ausführungsvariante kann vorgesehen sein, dass das äußere Ringelement einteilig oder einstückig mit dem Lagerbock ausgebildet ist. Mit anderen Worten ausgedrückt kann vorgesehen sein, dass der Lagerbock gleichzeitig als äußeres Ringelement dienen kann. Alle Merkmale, welche für das äußere Ringelement beschrieben sind, wie etwa die Entnahmeöffnung, können somit auch direkt im Lagerbock ausgebildet sein.

Der Lagerbock kann eine Lagerbockbasis und einen Lagerbockdeckel aufweisen. Dies bringt den Vorteil mit sich, dass der Lagerbockdeckel einfach abgenommen werden kann, wodurch ein vereinfachter Ausbau der Gleitlagerpads im Wartungsfall erreicht werden kann. Insbesondere können durch diese Maßnahme die Gleitlagerpads radial vom inneren Ringelement entfernt werden. Darüber hinaus können durch diese Maßnahme beim Zusammenbau der Gleitlagerung die einzelnen Gleitlagerpads vereinfacht am inneren Ringelement angeordnet werden, in dem diese radial durch die Öffnung des Lagerbockdeckels in dem Zwischenraum zwischen dem inneren Ringelement und dem äußeren Ringelement hineingehoben werden. Insbesondere kann vorgesehen sein, dass im Betrieb der Gleitlagerung das äußere Ringelement stillsteht und dass die Gleitlagerpads am inneren Ringelement befestigt sind und zusammen mit dem inneren Ringelement gedreht werden.

Ferner kann vorgesehen sein, dass die Lagerfläche mit dem äußeren Ringelement zusammenwirkt, wobei im äußeren Ringelement eine Gegenfläche zur Lagerfläche ausgebildet ist. Dies bringt den Vorteil mit sich, dass die Gleitfläche bzw. auch die Gegenfläche einfach gefertigt werden kann.

Weiters kann vorgesehen sein, dass an zumindest einem der Gleitlagerpads eine Verdrehsicherung ausgebildet ist, mittels welcher dieses Gleitlagerpad gegen Verdrehung relativ zum Innenring gesichert ist. Eine derartige Verdrehsicherung kann beispielsweise eine Erhebung, eine Vertiefung oder auch ein sonstiges formschlüssig zwischen dem Gleitlagerpad und dem inneren Ringelement wirkendes Element, wie etwa ein Mitnahmebolzen sein.

Gemäß einer Weiterbildung ist es möglich, dass zumindest einzelne der Gleitlagerpads mittels eines Verbindungselementes miteinander gekoppelt sind. Dies bringt den Vorteil mit sich, dass die einzelnen Gleitlagerpads relativ zueinander fixiert werden können. Somit kann die Position der einzelnen Gleitlagerpads fixiert werden.

Ferner kann vorgesehen sein, dass das äußere Ringelement eine Ausnehmung und/oder eine Versteifung aufweist, welche zur Positionsänderung eines Schubmittelpunktes des äußeren Ringelementes dient. Dies bringt den Vorteil mit sich, dass die Verformung des äußeren Ringelementes, welche aufgrund der Kraftwirkung auf die Gleitlagerung hervorgerufen wird, beeinflusst werden kann. Somit kann durch diese Maßnahme die aufgrund der Belastung auftretende Flächenpressung verringert bzw. verschoben werden.

Darüber hinaus kann vorgesehen sein, dass die Gegenfläche des äußeren Ringelementes und/oder die Lagerflächen der Gleitlagerpads eine von einer idealen Kugelkalotte zwischen 0,001 mm und 10mm, insbesondere zwischen 0,05mm und 5mm, bevorzugt zwischen 0,5mm und 1mm abweichende Formgebung aufweisen, welche derart ausgebildet ist, dass belastungsbedingte Verformungen des inneren Ringelementes und/oder des äußeren Ringelementes und/oder des Gleitlagerpads ausgeglichen werden und im belasteten Zustand die Lagerflächen der Gleitlagerpads flächig an der Gegenfläche des äußeren Ringelementes anliegt. Dies bringt den Vorteil mit sich, dass durch diese Maßnahme eine belastungsbedingte Verformung von einzelnen Komponenten der Gleitlagerung antizipiert werden kann, sodass im Betrieb die Lagerfläche und die Gegenfläche möglichst flächig aneinander anliegen, um die Flächenpressung zu verhindern.

In einer alternativen Ausführungsvariante kann vorgesehen sein, dass das innere Ringelement einteilig oder einstückig mit der Rotorwelle ausgebildet ist. Mit anderen Worten ausgedrückt, kann vorgesehen sein, dass die Rotorwelle gleichzeitig als inneres Ringelement dienen kann. Alle Merkmale, welche für das innere Ringelement beschrieben sind, können somit auch direkt in der Rotorwelle ausgebildet sein.

Vorteilhaft ist auch eine Ausprägung, gemäß welcher vorgesehen sein kann, dass die Gleitlagerung als hydrodynamische Gleitlagerung ausgebildet ist. Besonders eine hydrodynamische Gleitlagerung weist einen geringen Reibwiederstand und somit eine hohe Effizienz auf.

Der Scheitelpunkt im Sinne dieses Dokumentes ist im Längsschnitt des Gleitlagerpads gesehen jener Punkt, welcher den größten Durchmesser der Lagerfläche. Dieser Punkt ist rotationssymmetrisch um die Rotationsachse geführt und bildet daher auf das gesamte Gleitlagerpad gesehen eine Hüllkurve bzw. Hülllinie.

Weiters ist es denkbar, dass an einer der Oberflächen der Rotorwelle und/oder des Lagerbockes und/oder des äußeren Ringelementes und/oder der Gleitlagerpads eine Gleitbeschichtung angeordnet ist. Die Gleitbeschichtung kann durch ein additives Fertigungsverfahren hergestellt werden. Insbesondere ist es denkbar, dass die Gleitlagerbeschichtung durch eines der folgenden Verfahren hergestellt wird: Metalldrahttransfer, Elektronenstrahlschweißen, Reibschweißen, Laserauftragschweißen, Metall 3D-Druck, Direct Energy Deposition, Binder Jetting, Material Jetting, Kaltgasspritzen, Selektives Laserschmelzen, Materialextrusion, direct metal laser sintering, direct metal laser melting, cold metal transfer, Metall-Inertgas (MIG)-Schweißen, Wolfram-Inertgas (WIG)-Schweißen, vat photopolymerisation.

Weiters ist es denkbar, dass die Gleitbeschichtung durch ein thermisches Spritzen, wie etwa Plasmaspritzen; Flammspritzen; Drahtflammspritzen; Lichtbogenspritzen; atmosphärischem Plasmaspritzen und Hochgeschwindigkeitsflammspritzen hergestellt wird.

Weiters ist es denkbar, dass die Gleitbeschichtung durch eines der folgenden Verfahren hergestellt wird: Detonationsspritzen; Laserspritzen; galvanisches Beschichten; Pulverbeschichten; elektromagnetisches Pulsschweißen, Elektronenstrahlaufdampfung.

Mögliche Materialen für eine Gleitbeschichtung sind: Bronzelegierungen; Aluminium-Zin-Legierungen; Weißmetall; Metallmatrix-Verbundwerkstoffe mit Trockenschmierstoffen und auch Kombinationen daraus.

Zum besseren Verständnis der Erfindung wird diese anhand der nachfolgenden Figuren näher erläutert.

Es zeigen jeweils in stark vereinfachter, schematischer Darstellung:
- Fig. 1: eine schematische Darstellung einer Windkraftanlage;
- Fig. 2: eine perspektivische Darstellung eines ersten Ausführungsbeispiels einer Gleitlagerung;
- Fig. 3: ein Längsschnitt des ersten Ausführungsbeispiels der Gleitlagerung;
- Fig. 4: eine perspektivische Ansicht des Längsschnittes des ersten Ausführungsbeispiels der Gleitlagerung;
- Fig. 5: eine perspektivische Ansicht des Längsschnittes des ersten Ausführungsbeispiels der Gleitlagerung, wobei ein Deckel ausgeblendet ist;
- Fig. 6: eine perspektivische Ansicht des ersten Ausführungsbeispiels eines äußeren Ringelementes;
- Fig. 7: eine perspektivische Ansicht des ersten Ausführungsbeispiels einer Rotorwelle mit daran angeordneten Gleitlagerpads;
- Fig. 8: ein Längsschnitt eines zweiten Ausführungsbeispiels der Gleitlagerung;
- Fig. 9: ein Längsschnitt eines dritten Ausführungsbeispiels der Gleitlagerung;
- Fig. 10: ein Längsschnitt eines vierten Ausführungsbeispiels der Gleitlagerung;
- Fig. 11: eine perspektivische Ansicht des Längsschnittes des dritten Ausführungsbeispiels der Gleitlagerung;
- Fig. 12: ein Querschnitt des dritten Ausführungsbeispiels der Gleitlagerung;
- Fig. 13: eine perspektivische Darstellung eines äußeren Ringelementes des dritten Ausführungsbeispiels der Gleitlagerung;
- Fig. 14: ein Gleitlagerpad des dritten Ausführungsbeispiels der Gleitlagerung in einer ersten perspektivischen Darstellung;
- Fig. 15: das Gleitlagerpad des dritten Ausführungsbeispiels der Gleitlagerung in einer zweiten perspektivischen Darstellung;
- Fig. 16: das Gleitlagerpad des dritten Ausführungsbeispiels der Gleitlagerung in einer dritten perspektivischen Darstellung;
- Fig. 17: ein weiteres Ausführungsbeispiel der Gleitlagerung mit Gleitlagerpads, die mit einem Gleitlagerpadaufnahmering verschraubt sind, in einer ersten perspektivischen Ansicht;
- Fig. 18: das weitere Ausführungsbeispiel der Gleitlagerung mit Gleitlagerpads, die mit dem Gleitlagerpadaufnahmering verschraubt sind, in einer Schnittdarstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

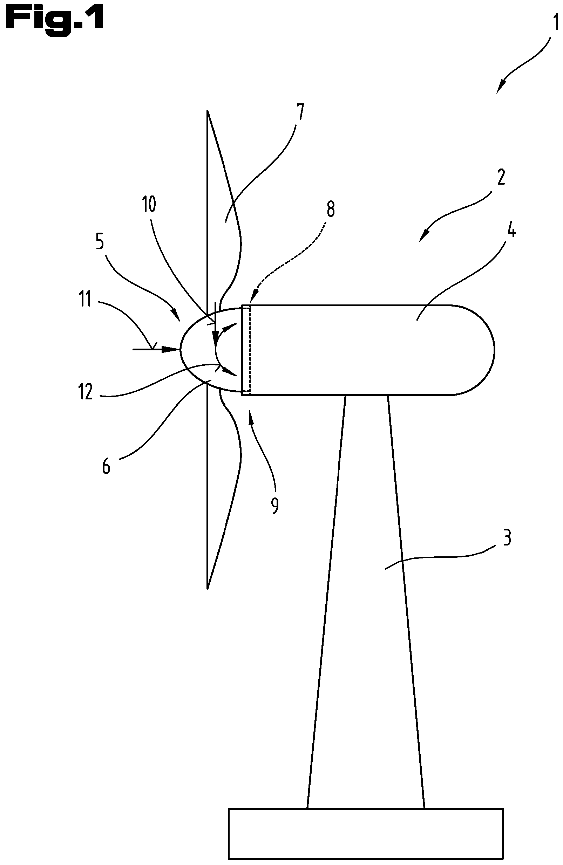

Fig. 1 zeigt in einer schematischen Darstellung ein erstes Ausführungsbeispiel einer Windkraftanlage 1 zum Erzeugen von elektrischer Energie aus Windenergie. Die Windkraftanlage 1 umfasst eine Gondel 2, welche an einem Turm 3 drehbar aufgenommen ist. Die Gondel 2 umfasst ein Gondelgehäuse 4, welches die Hauptstruktur der Gondel 2 bildet. Im Gondelgehäuse 4 der Gondel 2 sind die elektrotechnischen Komponenten wie etwa ein Generator der Windkraftanlage 1 angeordnet.

Weiters ist ein Rotor 5 ausgebildet, welcher eine Rotornabe 6 mit daran angeordneten Rotorblättern 7 aufweist. Die Rotornabe 6 wird als Teil der Gondel 2 gesehen. Die Rotornabe 6 ist mittels einer Rotorlagerung 8 drehbeweglich am Gondelgehäuse 4 aufgenommen. Insbesondere ist vorgesehen, dass eine erfindungsgemäße und noch näher beschriebene Gleitlagerung 9 als Rotorlagerung 8 eingesetzt wird. Insbesondere kann vorgesehen sein, dass die Rotornabe 6 an einer Rotorwelle 16 angeordnet ist, wobei die Rotorwelle 16 in der Rotorlagerung 8 gelagert ist.

Die Rotorlagerung 8, welche zur Lagerung der Rotornabe 6 am Gondelgehäuse 4 der Gondel 2 dient, ist zur Aufnahme einer Radialkraft 10 und einer Axialkraft 11 ausgebildet. Die Axialkraft 11 ist bedingt durch die Kraft des Windes. Die Radialkraft 10 ist bedingt durch die Gewichtskraft des Rotors 5 und greift am Schwerpunkt des Rotors 5 an. Da der Schwerpunkt des Rotors 5 außerhalb der Rotorlagerung 8 liegt, wird in der Rotorlagerung 8 durch die Radialkraft 10 ein Kippmoment 12 hervorgerufen. Das Kippmoment 12 kann ebenfalls durch eine ungleichmäßige Belastung der Rotorblätter 7 hervorgerufen werden. Dieses Kippmoment 12 kann mittels einer zweiten Lagerung aufgenommen werden, welche in einem Abstand zur Rotorlagerung 8 angeordnet ist. Die zweite Lagerung kann beispielsweise im Bereich des Generators ausgebildet sein.

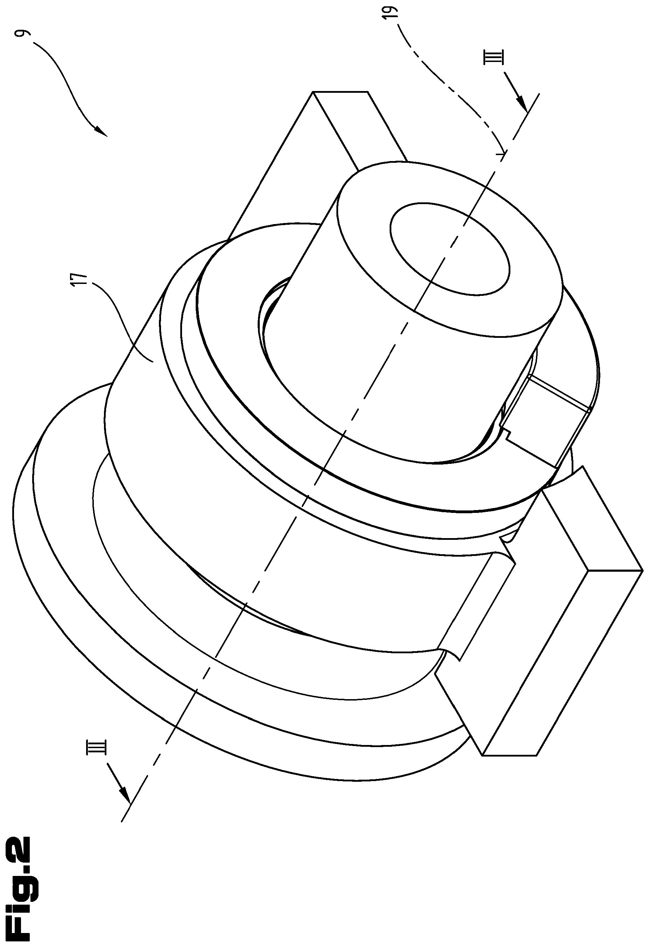

Fig. 2 zeigt ein erstes Ausführungsbeispiel der in der Gondel 2 verbauten Gleitlagerung 9. Natürlich kann die in Fig. 2 dargestellte Gleitlagerung 9 auch in sämtlichen anderen Industrieanwendungen außerhalb von Windkraftanlagen eingesetzt werden. Die Gleitlagerung 9 ist in Fig. 2 in einer perspektivischen Ansicht dargestellt.

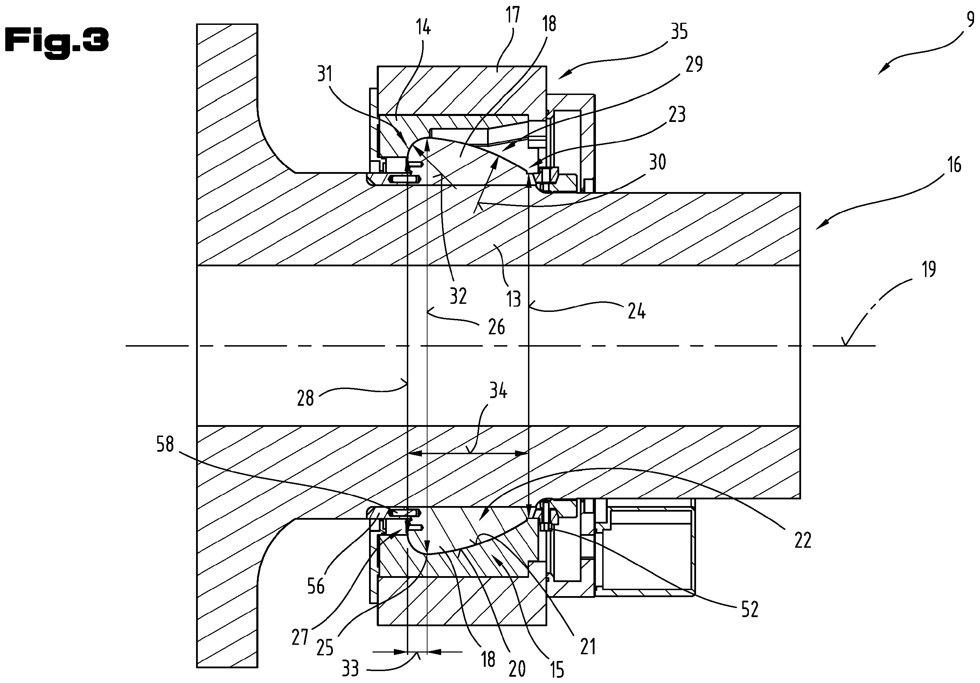

In Fig. 3 ist das erste Ausführungsbeispiel der Gleitlagerung 9 in einer Längsschnittdarstellung gezeigt.

In weiterer Folge wird die Gleitlagerung 9 anhand einer Zusammenschau der Figuren 2 und 3 beschrieben.

Wie aus den Figuren 2 und 3 ersichtlich, kann vorgesehen sein, dass die Gleitlagerung 9 ein inneres Ringelement 13 und ein äußeres Ringelement 14 aufweist. Zwischen dem inneren Ringelement 13 und dem äußeren Ringelement 14 ist ein Gleitlagerelement 15 angeordnet, welches zur rotatorischen Gleitlagerung des inneren Ringelementes 13 relativ zum äußeren Ringelement 14 dient.

Im Ausführungsbeispiel, welches in den Figuren 2 und 3 dargestellt ist, ist das innere Ringelement 13 als Rotorwelle 16 ausgebildet. Natürlich kann das innere Ringelement 13 auch eine sonstige Welle sein. Weiters ist es auch denkbar, dass das innere Ringelement 13 als eigenständiges Bauteil ausgebildet ist, welches an einer Welle, insbesondere einer Rotorwelle 16 aufgenommen ist.

Wie besonders gut aus Fig. 3 ersichtlich, kann vorgesehen sein, dass das äußere Ringelement 14 in einem Lagerbock 17 aufgenommen ist. Insbesondere kann vorgesehen sein, dass der Lagerbock 17 mit dem Gondelgehäuse 4 gekoppelt ist oder alternativ auch direkt im Gondelgehäuse 4 ausgeformt ist. Bei diesem Ausführungsbeispiel kann somit vorgesehen sein, dass das äußere Ringelement 14 starr mit dem Gondelgehäuse 4 gekoppelt ist und das innere Ringelement 13 mittels des Gleitlagerelementes 15 relativ zum äußeren Ringelement 14 bezüglich einer Rotationsachse 19 verdrehbar ist.

Weiters kann vorgesehen sein, dass der Lagerbock 17 direkt als äußeres Ringelement 14 dient.

Somit ist die Rotorwelle 16 mittels der Gleitlagerung 9 drehbar im Gondelgehäuse 4 aufgenommen.

Wie aus den Figuren 2 und 3 weiters ersichtlich, kann vorgesehen sein, dass das Gleitlagerelement 15 mehrere einzelne Gleitlagerpads 18 umfasst, welche über den Umfang verteilt zwischen dem inneren Ringelement 13 und dem äußeren Ringelement 14 angeordnet sind.

Die einzelnen Gleitlagerpads 18 sind durch den in Fig. 3 gezeigten Aufbau im Betriebszustand der Gleitlagerung 9 fest mit dem inneren Ringelement 13 gekoppelt und drehen sich somit mit diesem relativ zum äußeren Ringelement 14. Um die Drehbewegung zwischen dem inneren Ringelement 13 und dem äußeren Ringelement 14 zu ermöglichen, ist an den einzelnen Gleitlagerpads 18 jeweils eine Lagerfläche 20 ausgebildet, welche im einsatzbereiten Zustand der Gleitlagerung 9 an einer Gegenfläche 21 des äußeren Ringelementes 14 anliegt. Die Gegenfläche 21 ist an einer Innenseite 22 des äußeren Ringelements 14 angeordnet.

Die Lagerfläche 20 des Gleitlagerpads 18 und die Gegenfläche 21 des äußeren Ringelements 14 sind als Gleitflächen ausgebildet, welche im Betrieb der Gleitlagerung 9 aneinander gleiten. Insbesondere kann vorgesehen sein, dass die Gegenfläche 21 des äußeren Ringelementes 14 als harte, verschleißfeste Oberfläche ausgebildet ist, welche beispielsweise durch einen gehärteten Stahl gebildet sein kann. Die Lagerfläche 20 des Gleitlagerpads 18 kann aus einem im Vergleich zur Gegenfläche 21 weichen Gleitlagerwerkstoff gebildet sein. Natürlich ist es auch denkbar, dass die Lagerfläche 20 eine Gleitbeschichtung aufweist.

Wie aus Fig. 3 besonders gut ersichtlich, kann vorgesehen sein, dass die einzelnen Gleitlagerpads 18 jeweils eine in Axialrichtung gesehen gewölbte Lagerfläche 20 aufweisen.

Wie aus Fig. 3 weiters ersichtlich, kann vorgesehen sein, dass die Lagerfläche 20 im Bereich einer ersten Stirnseite 23 des Gleitlagerpads 18 einen ersten Durchmesser 24 aufweist. Die Lagerfläche 20 kann ausgehend von dieser ersten Stirnseite 23 eine Durchmesservergrößerung hin zu einem Scheitelpunkt 25 aufweisen. Die Lagerfläche 20 kann im Scheitelpunkt 25 einen Durchmesser 26 aufweisen.

Ausgehend vom Scheitelpunkt 25 kann die Lagerfläche 20 zu einer zweiten Stirnseite 27 des Gleitlagerpads 18 hin eine Durchmesserverkleinerung aufweisen. Im Bereich der zweiten Stirnseite 27 kann die Lagerfläche 20 einen zweiten Durchmesser 28 aufweisen.

Insbesondere kann vorgesehen sein, dass zwischen der ersten Stirnseite 23 und dem Scheitelpunkt 25 ein Kugelkalottenabschnitt 29 ausgebildet ist. Der Kugelkalottenabschnitt 29 kann die Grundform einer Kugelkalotte mit einem Kugelkalottenradius 30 aufweisen.

Zwischen der zweiten Stirnseite 27 und dem Scheitelpunkt 25 kann ein Übergangsabschnitt 31 ausgebildet sein. Der Übergangsabschnitt 31 kann einen Übergangsradius 32 aufweisen. Insbesondere kann vorgesehen sein, dass der Übergangsradius 32 kleiner ist, als der Kugelkalottenradius 30.

Weiters kann vorgesehen sein, dass der Scheitelpunkt 25 in einem Abstand 33 von einer zweiten Stirnseite 27 des Gleitlagerpads 18 angeordnet ist. Das Gleitlagerpad 18 kann eine Axialerstreckung 34 aufweisen.

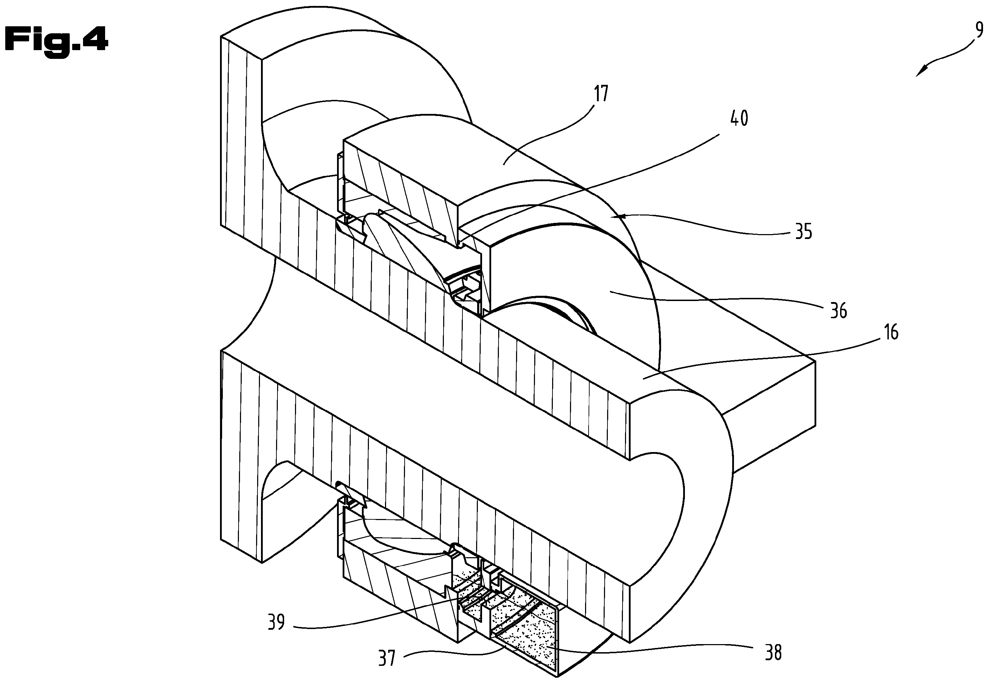

Fig. 4 zeigt das erste Ausführungsbeispiel der Gleitlagerung 9 in einer perspektivischen Schnittdarstellung, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

Wie aus Fig. 4 ersichtlich, kann vorgesehen sein, dass an einer Axialstirnseite 35 des Lagerbockes 17 ein Deckel 36 angeordnet ist. Der Deckel 36 dient zum Verschließen des Innenraumes des Lagerbockes 17.

Wie aus Fig. 4 weiters ersichtlich, kann vorgesehen sein, dass an dem Deckel 36 ein Schmierölreservoir 37 angeschlossen ist, welches zur Aufnahme von Schmieröl 38 dient. Insbesondere kann hierbei vorgesehen sein, dass im Deckel 36 eine Durchgangsöffnung 39 ausgebildet ist, durch welche das Schmieröl 38 vom Schmierölreservoir 37 in den Innenraum des Lagerbockes 17 strömen kann.

Wie aus Fig. 4 weiters ersichtlich, kann vorgesehen sein, dass im Deckel 36 eine Dichtung 40 aufgenommen ist, welche zur Abdichtung des Deckels 36 am Lagerbock 17 dient. Weiters kann vorgesehen sein, dass eine weitere Dichtung ausgebildet ist, welche zur Abdichtung zwischen dem Deckel 36 und der Rotorwelle 16 dient. Insbesondere kann vorgesehen sein, dass die weitere Dichtung, wie aus Fig. 4 ersichtlich, direkt mit der Rotorwelle 16 zusammenwirkt. Die weitere Dichtung kann beispielsweise ein Wellendichtring sein.

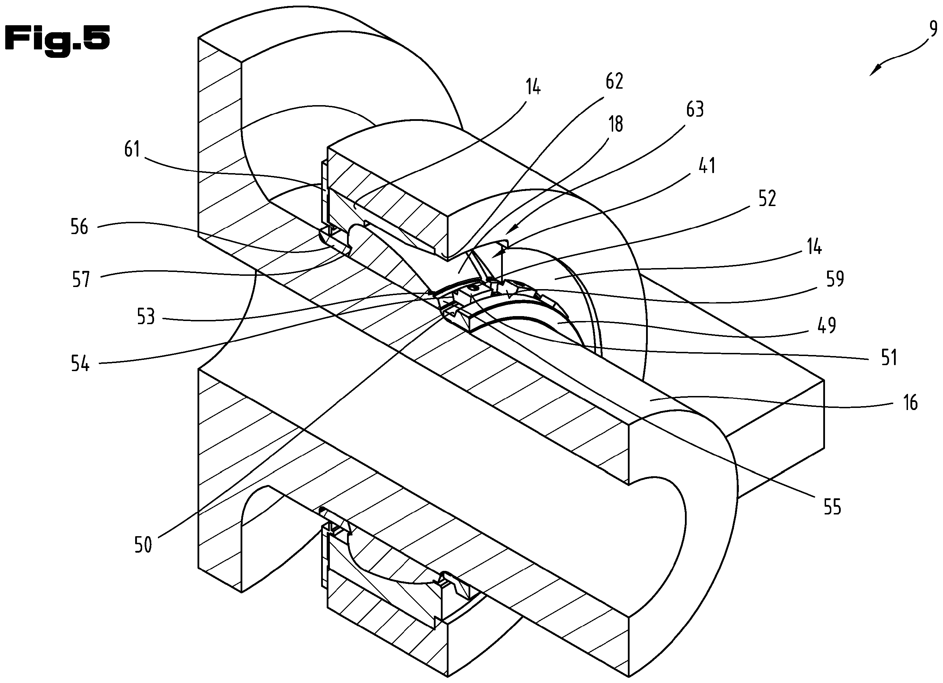

Fig. 5 zeigt eine perspektivische Schnittdarstellung der Gleitlagerung 9, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 4 hingewiesen bzw. Bezug genommen.

In Fig. 5 sind der Übersichtlichkeit halber der Deckel 36 und das Schmierölreservoir 37 ausgeblendet. Somit sind die innenliegenden Bauteile der Gleitlager 9 sichtbar.

Wie aus Fig. 5 ersichtlich, kann vorgesehen sein, dass im äußeren Ringelement 14 eine Entnahmeöffnung 41 ausgebildet ist, welche zur axialen Entnahme von einzelnen der Gleitlagerpads 18 dient.

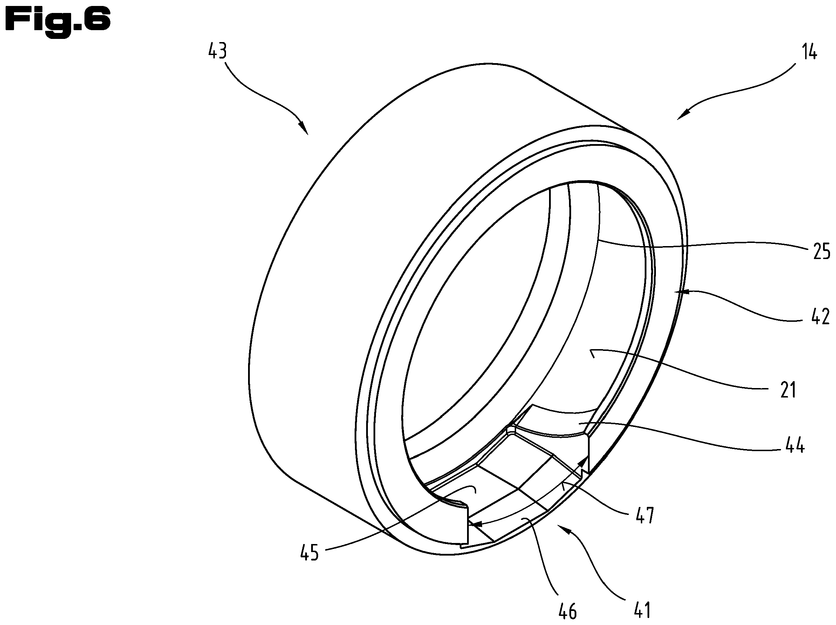

Fig. 6 zeigt eine perspektivische Ansicht des äußeren Ringelementes 14, wobei wiederum für gleiche Teile gleiche Bezugszeichen bzw. Bauteilbezeichnungen wie in den vorangegangenen Figuren 1 bis 5 verwendet werden. Um unnötige Wiederholungen zu vermeiden, wird auf die detaillierte Beschreibung in den vorangegangenen Figuren 1 bis 5 hingewiesen bzw. Bezug genommen.

In Fig. 6 ist die Entnahmeöffnung 41 besonders gut sichtbar.

Wie aus den Fig. 5 und 6 ersichtlich, kann vorgesehen sein, dass die Entnahmeöffnung 41 die im äußeren Ringelement 14 ausgebildete Gegenfläche 21 zumindest abschnittsweise unterbricht. Insbesondere kann vorgesehen sein, dass sich die Entnahmeöffnung 41 ausgehend von einer ersten Stirnseite 42 des äußeren Ringelementes 14 erstreckt. Insbesondere kann vorgesehen sein, dass sich die Entnahmeöffnung 41 nicht bis zu einer zweiten Stirnseite 43 des äußeren Ringelementes 14 erstreckt. Viel mehr kann sich die Entnahmeöffnung 41 nur bis zum Scheitelpunkt 25 erstrecken.

Wie aus Fig. 6 weiters ersichtlich, kann vorgesehen sein, dass im äußeren Ringelement 14 anschließend an die Entnahmeöffnung 41 in Umfangsrichtung ein Öleinzug 44 ausgebildet ist, welcher den Übergang zwischen der Entnahmeöffnung 41 und der Gegenfläche 21 bildet. Insbesondere kann vorgesehen sein, dass der Öleinzug 44 beispielsweise keilförmig ausgebildet ist.

Wie besonders gut aus einer Zusammenschau der Fig. 3 und 6 ersichtlich, kann vorgesehen sein, dass die Entnahmeöffnung 41 sich zur ersten Stirnseite 42 hin radial aufweitend ausgebildet ist. Insbesondere kann hierbei vorgesehen sein, dass ein erster Entnahmeöffnungsbereich 45 und ein zweiter Entnahmeöffnungsbereich 46 ausgebildet sind, welche eine unterschiedliche radiale Aufweitung aufweisen. Weiters kann vorgesehen sein, dass der zweite Entnahmeöffnungsbereich 46, welcher näher zur ersten Stirnseite 42 des äußeren Ringelementes 14 angeordnet ist, eine größere radiale Aufweitung aufweist, als der erste Entnahmeöffnungsbereich 45.

In einem weiteren, nicht dargestellten Ausführungsbeispiel, kann natürlich auch vorgesehen sein, dass die Entnahmeöffnung 41 das äußere Ringelement 14 radial vollständig durchdringt.

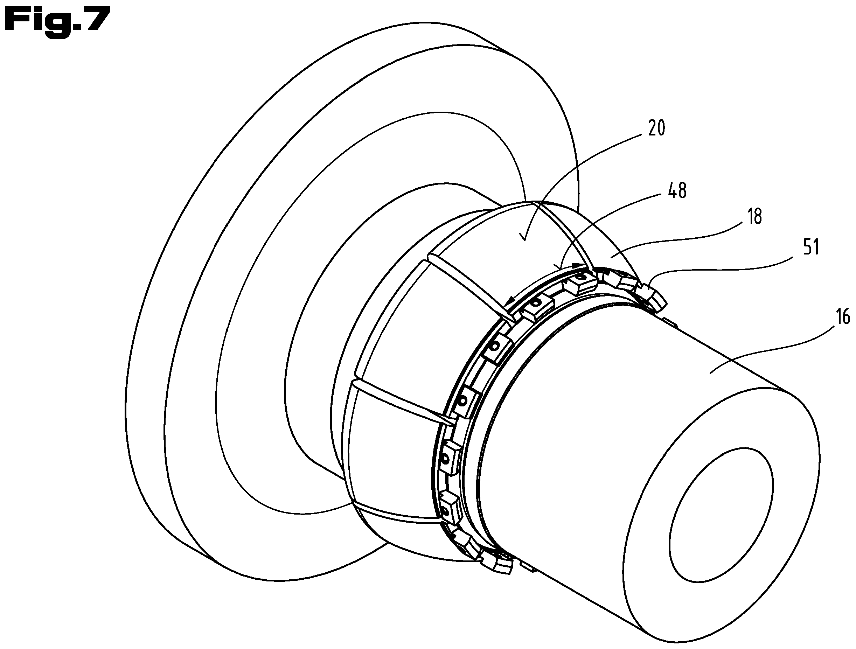

Fig. 7 zeigt die Rotorwelle 16 mit den daran angeordneten Gleitlagerpads 18 in einer perspektivischen Ansicht, wobei wiederum für gleiche Teile gleiche Bezugszeichen bzw. Bauteilbezeichnungen wie in den vorangegangenen Figuren 1 bis 6 verwendet werden. Um unnötige Wiederholungen zu vermeiden, wird auf die detaillierte Beschreibung in den vorangegangenen Figuren 1 bis 6 hingewiesen bzw. Bezug genommen.

Wie aus einer Zusammenschau der Fig. 6 und 7 ersichtlich, kann vorgesehen sein, dass die Entnahmeöffnung 41 eine Umfangserstreckung 47 aufweist. Die einzelnen Gleitlagerpads 18 können eine Umfangserstreckung 48 aufweisen.

Wie besonders gut aus Fig. 5 ersichtlich, kann vorgesehen sein, dass eine Wellenmutter 49 ausgebildet ist, welche auf die Rotorwelle 16 aufgeschraubt sein kann. An der Wellenmutter 49 kann eine Axialsicherungselementaufnahme 50 ausgebildet sein, welche zur Aufnahme von einzelnen Axialsicherungselementen 51 dient. Insbesondere kann vorgesehen sein, dass die Axialsicherungselementaufnahme 50 eine Gewindebohrung umfasst, wobei die einzelnen Axialsicherungselemente 51 mittels einer Befestigungsschraube 52 in Radialrichtung in die Gewindebohrung eingeschraubt werden können.

Weiters kann vorgesehen sein, dass die Axialsicherungselemente 51 an einer Axialstirnseite 53 eine Keilfläche 54 aufweisen. An der ersten Stirnseite 23 des Gleitlagerpads 18 kann eine erste Gegenkeilfläche 55 ausgebildet sein. Insbesondere kann vorgesehen sein, dass die Keilfläche 54 mit der ersten Gegenkeilfläche 55 zusammenwirkt bzw. an dieser anliegt.

Wie aus Fig. 5 weiters ersichtlich, kann vorgesehen sein, dass ein Axialanschlagring 56 ausgebildet ist, welcher zusammen mit dem Axialsicherungselement 51 zum Klemmen des Gleitlagerpads 18 dient. Insbesondere können die einzelnen Gleitlagerpads 18 zwischen dem Axialanschlagring 56 und dem Axialsicherungselement 51 bzw. mehreren Axialsicherungselementen 51 geklemmt werden.

Wie aus Fig. 5 ersichtlich, kann vorgesehen sein, dass der Axialanschlagring 56 eine Keilfläche 57 aufweist, welche derart ausgebildet ist, dass eine formschlüssige Verbindung zwischen dem Gleitlagerpad 18 und dem Axialanschlagring 56 erreicht werden kann.

Wie aus Fig. 3 ersichtlich, kann vorgesehen sein, dass ein Verdrehsicherungselement 58 ausgebildet ist, welches zwischen dem Axialanschlagring 56 und dem Gleitlagerpad 18 wirkt. Insbesondere kann vorgesehen sein, dass das Verdrehsicherungselement 58 in Form eines Zylinderstiftes ausgebildet ist, welcher in einer Bohrung im Axialanschlagring 56 bzw. in einer Bohrung im Gleitlagerpad 18 aufgenommen ist.

Wie aus Fig. 5 ersichtlich, kann vorgesehen sein, dass an der Wellenmutter 49 eine Lauffläche 59 für eine im Deckel 36 angeordnete Dichtung ausgebildet ist. Analog dazu kann im Axialanschlagring 56 eine Lauffläche 60 ausgebildet sein. Die Lauffläche 60 kann mit einer in einem zweiten Deckel 61 angeordneten Dichtung zusammenwirken.

Wie aus Fig. 5 weiters ersichtlich, kann vorgesehen sein, dass der Lagerbock 17 einen Axialanschlag 62 für das äußere Ringelement 14 aufweist. Weiters kann vorgesehen sein, dass im Axialanschlag 62 eine Ausnehmung 63 ausgebildet ist, welche mit der Entnahmeöffnung 41 korrespondiert.

Im zusammengebauten Zustand der Gleitlagerung 9 ist das äußere Ringelement 14 im Lagerbock 17 aufgenommen. Hierbei kann vorgesehen sein, dass das äußere Ringelement 14 axial zwischen dem zweiten Deckel 61 und dem Axialanschlag 62 im Lagerbock 17 geklemmt ist. Hierbei kann vorgesehen sein, dass der zweite Deckel 61 mittels Befestigungsmittel axial gegen den Lagerbock verschraubt ist.

Der Axialanschlagring 56 kann an der Rotorwelle 16 befestigt sein. Weiters kann die Wellenmutter 49 auf die Rotorwelle 16 aufgeschraubt sein. Wie aus Fig. 5 ersichtlich, können einzelne Gleitlagerpads 18 zwischen dem Axialanschlagring 56 und jeweils zumindest einem Axialsicherungselement 51 geklemmt sein. Durch die Formgebung des Axialanschlagringes 56 bzw. des Axialsicherungselementes 51 können die Gleitlagerpads 18 sowohl in Axialrichtung als auch in Radialrichtung formschlüssig geklemmt mit der Rotorwelle 16 gekoppelt sein.

Zum Wechseln der einzelnen Gleitlagerpads 18 kann der Deckel 36 vom Lagerbock 17 abgenommen werden. Alternativ dazu ist es auch denkbar, dass im Deckel 36 eine Wartungsöffnung ausgebildet ist, welche vom Deckel 36 abhängbar ist, wodurch der Innenraum des Lagerbockes 17 zugänglich ist.

In einer weiteren Alternative ist es auch denkbar, dass der Deckel 36 geteilt ausgebildet ist, sodass er radial von der Rotorwelle 16 entfernt werden kann und nicht in Axialrichtung entlang der Rotorwelle 16 verschoben werden muss. Hierbei kann der Deckel 36 beispielsweise in einer Mittelebene geteilt ausgebildet sein.

Wenn die innenliegenden Bauteile des Lagerbockes 17 entsprechend der Darstellung nach Fig. 5 zugänglich sind, so kann zum Wechseln der einzelnen Gleitlagerpads 18 jeweils ein zu wechselndes Gleitlagerpad 18 in den Bereich der Entnahmeöffnung 41 verdreht werden. Anschließend kann das Axialsicherungselement 51 des zu wechselnden Gleitlagerpads 18 gelöst werden und entfernt werden. Dadurch ist das zu wechselnde Gleitlagerpad 18 nicht mehr an der Rotorwelle 16 geklemmt. In einem weiteren Verfahrensschritt kann das zu wechselnde Gleitlagerpad 18 axial bzw. optional gleichzeitig auch radial nach außen durch die Entnahmeöffnung 41 hindurch verschoben werden, um das Gleitlagerpad 18 aus dem Inneren des Lagerbockes 17 zu entfernen. In einem weiteren Verfahrensschritt kann ein neues Gleitlagerpad 18 in umgekehrter Reihenfolge wieder in das Innere des Lagerbockes 17 eingesetzt werden bzw. mit dem Axialsicherungselement 51 geklemmt werden. Dieser Vorgang kann für alle zu wechselnden Gleitlagerpads 18 wiederholt werden.

Anschließend kann das Innere des Lagerbockes 17 wieder mittels des Deckels 36 verschlossen werden und so die Gleitlagerung 9 wieder betriebsbereit gemacht werden.

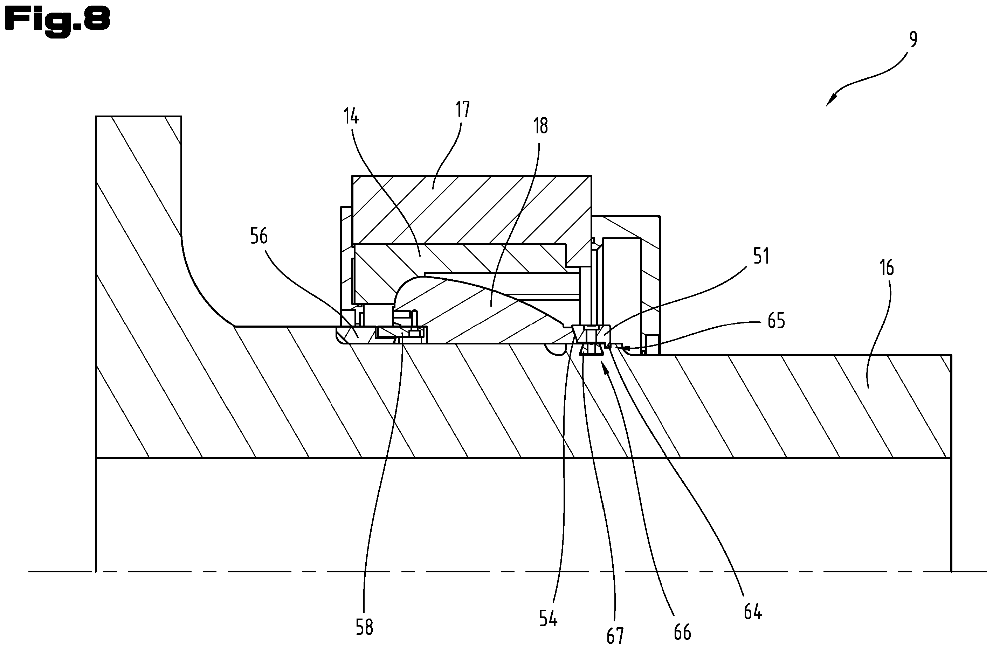

In der Fig. 8 ist eine weitere und gegebenenfalls für sich eigenständige Ausführungsform der Gleitlagerung 9 gezeigt, wobei wiederum für gleiche Teile gleiche Bezugszeichen bzw. Bauteilbezeichnungen wie in den vorangegangenen Figuren 1 bis 7 verwendet werden. Um unnötige Wiederholungen zu vermeiden, wird auf die detaillierte Beschreibung in den vorangegangenen Figuren 1 bis 7 hingewiesen bzw. Bezug genommen.

Wie aus Fig. 8 ersichtlich, kann vorgesehen sein, dass die Verdrehsicherungselemente 58 beispielsweise in Form von Passfedern ausgebildet sein können, welche mit dem Gleitlagerpad 18 verschraubt sein können. Weiters kann im Axialanschlagring 56 eine Ausnehmung zur Aufnahme des Verdrehsicherungselementes 58 ausgebildet sein.

Unabhängig von den weiteren Merkmalen kann, wie aus Fig. 8 weiters ersichtlich, vorgesehen sein, dass das Axialsicherungselement 51 eine Anschlagnase 64 aufweist, welche in einer in die Rotorwelle 16 eingebrachte Nut 65 aufgenommen sein kann. Das Axialsicherungselement 51 kann hierbei ebenso eine Keilfläche 54 aufweisen, welche zum Klemmen des Gleitlagerpads 18 dient. Weiters kann in der Rotorwelle 16 eine trapezförmige Nut 66 ausgebildet sein, in welcher ein Nutstein 67 aufgenommen sein kann. Insbesondere kann der Nutstein 67 in Umfangsrichtung relativ zur Rotorwelle 16 verschiebbar sein. Der Nutstein 67 kann ein Innengewinde aufweisen, welches zum Einschrauben der Befestigungsschraube 52 zum Klemmen des Axialsicherungselementes 51 dient.

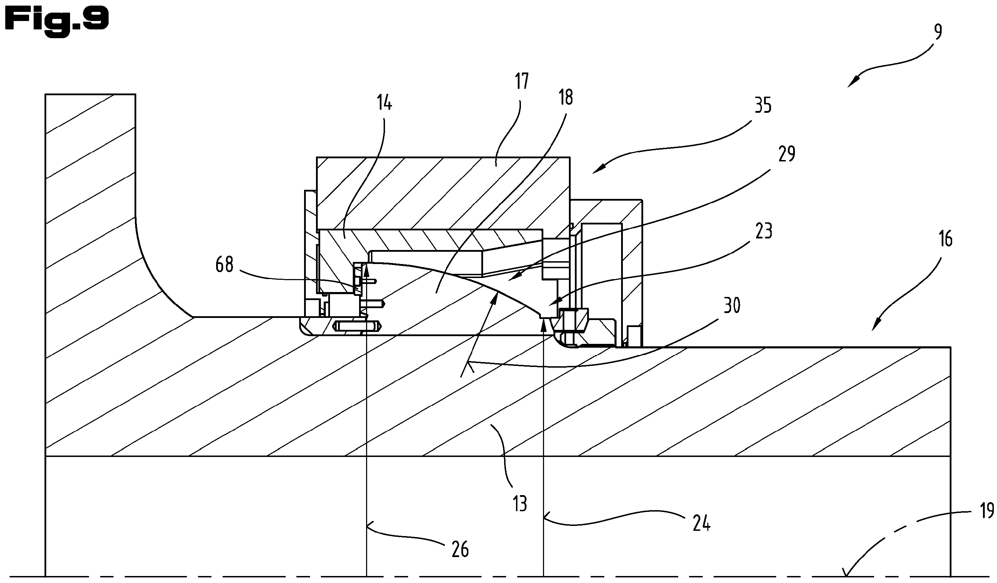

In der Fig. 9 ist eine weitere und gegebenenfalls für sich eigenständige Ausführungsform der Gleitlagerung 9 gezeigt, wobei wiederum für gleiche Teile gleiche Bezugszeichen bzw. Bauteilbezeichnungen wie in den vorangegangenen Figuren 1 bis 8 verwendet werden. Um unnötige Wiederholungen zu vermeiden, wird auf die detaillierte Beschreibung in den vorangegangenen Figuren 1 bis 8 hingewiesen bzw. Bezug genommen.

Wie aus Fig. 9 ersichtlich, kann vorgesehen sein, dass am Gleitlagerpad 18 ein Anlaufringsegment 68 angeordnet ist. Das Anlaufringsegment 68 kann zur Aufnahme von Axialkräften zwischen dem Gleitlagerpad 18 und dem äußeren Ringelement 14 dienen. Insbesondere kann vorgesehen sein, dass das Anlaufringsegment 68 eine Gleitfläche aufweist und dass das äußere Ringelement 14 eine Gegengleitfläche aufweist, wobei die Gleitfläche und die Gegengleitfläche aneinander anliegen und im Betrieb aneinander gleiten.

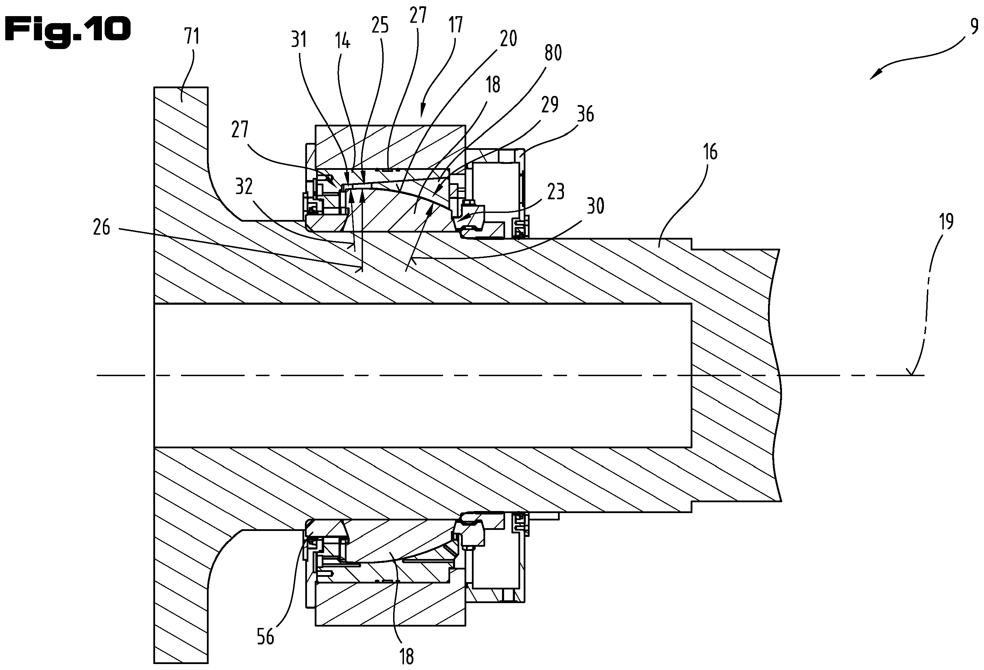

In den Figuren 10 bis 13 ist eine weitere und gegebenenfalls für sich eigenständige dritte Ausführungsform der Gleitlagerung 9 gezeigt, wobei wiederum für gleiche Teile gleiche Bezugszeichen bzw. Bauteilbezeichnungen wie in den vorangegangenen Figuren 1 bis 9 verwendet werden. Um unnötige Wiederholungen zu vermeiden, wird auf die detaillierte Beschreibung in den vorangegangenen Figuren 1 bis 9 hingewiesen bzw. Bezug genommen.

Wie aus Fig. 10 ersichtlich, kann vorgesehen sein, dass die Lagerfläche 20 im Bereich der ersten Stirnseite 23 des Gleitlagerpads 18 ausgehend von der ersten Stirnseite 23 eine Durchmesservergrößerung hin zum Scheitelpunkt 25 aufweisen. Die Lagerfläche 20 kann im Scheitelpunkt 25 einen Durchmesser 26 aufweisen.

Wie aus Fig. 10 weiters ersichtlich, kann die Lagerfläche 20 ausgehend vom Scheitelpunkt 25 zu der zweiten Stirnseite 27 hin eine Durchmesserverkleinerung aufweisen.

Im Ausführungsbeispiel nach Fig. 10 kann vorgesehen sein, dass zwischen der ersten Stirnseite 23 und dem Scheitelpunkt 25 ein Kugelkalottenabschnitt 29 ausgebildet ist. Der Kugelkalottenabschnitt 29 kann die Grundform einer Kugelkalotte mit einem Kugelkalottenradius 30 aufweisen.

Zwischen der zweiten Stirnseite 27 und dem Scheitelpunkt 25 kann ein Übergangsabschnitt 31 ausgebildet sein. Der Übergangsabschnitt 31 kann einen Übergangsradius 32 aufweisen. Im Ausführungsbeispiel nach Fig. 10 kann vorgesehen sein, dass der Übergangsradius 32 und der Kugelkalottenradius 30 gleich groß sind. Der Übergangsradius 32 und der Kugelkalottenradius 30 können somit im Scheitelpunkt 25 ohne einem Knick ineinander übergehen.

Zusätzlich zum Übergangsabschnitt 31 kann an der zweiten Stirnseite 27 des Gleitlagerpads 18 ein Anlaufringsegment 68 angeordnet sein, welches zum Aufnehmen von Axialkräften dienen kann.

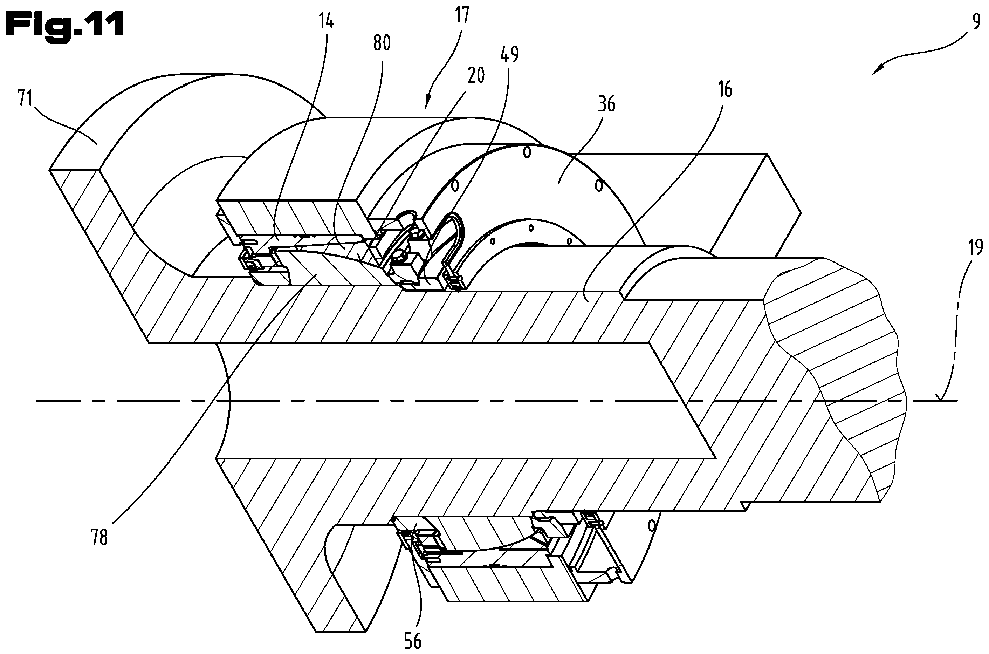

Wie aus Fig. 11 ersichtlich, kann vorgesehen sein, dass die Rotorwelle 16 einen Rotorwellenflansch 71 aufweist, welcher zum Anflanschen der Rotornabe 6 dienen kann.

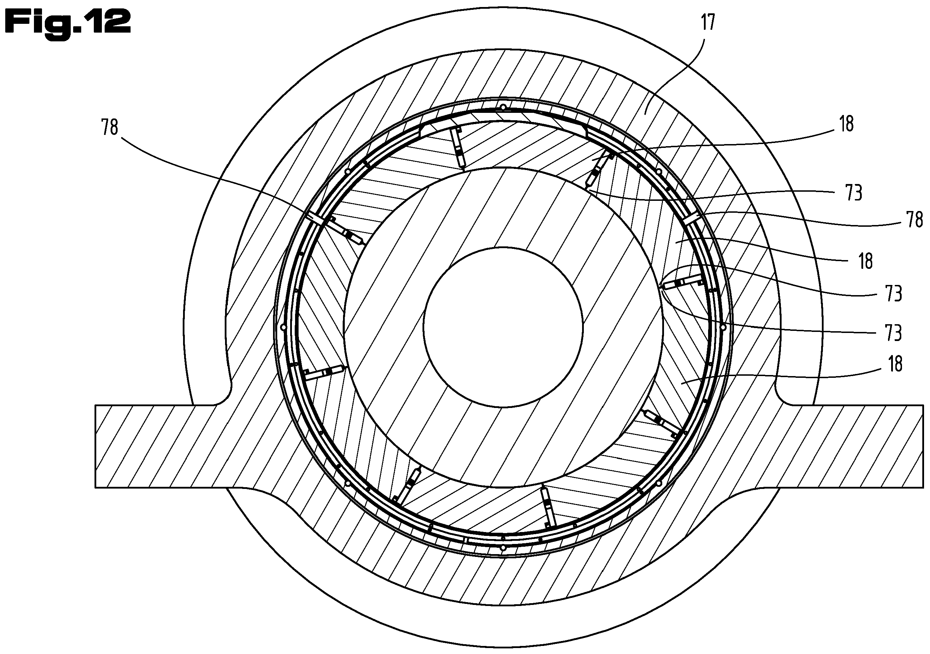

Wie aus Fig. 12 ersichtlich, kann vorgesehen sein, dass an den einzelnen Gleitlagerpads 18 Abstandhalter 73 ausgebildet sind. Die Abstandhalter 73 dienen zur richtigen Beabstandung der einzelnen Gleitlagerpads 18 zueinander in Umfangsrichtung. Insbesondere kann vorgesehen sein, dass die Abstandhalter 73 an zumindest einer der Umfangsseiten 74 des Gleitlagerpads 18 ausschließlich im Bereich der Innenseite 72 ausgebildet sind und sich nicht über die komplette Höhe der Gleitlagerpads 18 erstrecken. Weiters kann vorgesehen sein, dass an beiden Umfangsseiten 74 des Gleitlagerpads 18 die Abstandhalter 73 ausgebildet sind.

Wie aus einer Zusammenschau der Figuren 11, 12 und 13 ersichtlich, kann vorgesehen sein, dass an einem Außenumfang des äußeren Ringelementes 14 eine umlaufende Schmierölverteilungsnut 77 ausgebildet ist. Die Schmierölverteilungsnut 77 kann an jener Fläche ausgebildet sein, an welcher das äußere Ringelement 14 am Lagerbock 17 anliegt. Die Schmierölverteilungsnut 77 kann somit durch das äußere Ringelement 14 und den Lagerbock 17 begrenzt sein und somit einen Fluidkanal zum Transport eines Schmieröles bilden. Weiters kann vorgesehen sein, dass eine Schmierölbohrung 78 ausgebildet ist, welche die Schmierölverteilungsnut 77 mit der Gegenfläche 21 strömungsverbindet. Im Bereich der Gegenfläche 21 kann die Schmierölbohrung 78 in eine Öltasche 79 einmünden. Die Öltasche 79 kann sich über einen Großteil der Breite der Gegenfläche 21 erstrecken. Dies bringt den Vorteil mit sich, dass über die Schmierölverteilungsnut 77 mittels einer Ölpumpe die Gleitlagerpads 18 mit Schmieröl versorgt werden können.

Weiters kann vorgesehen sein, dass beidseitig der Schmierölverteilungsnut 77 eine Dichtung angeordnet ist, welche zum Abdichten der Schmierölverteilungsnut 77 zwischen dem äußeren Ringelement 14 und dem Lagerbock 17 dient.

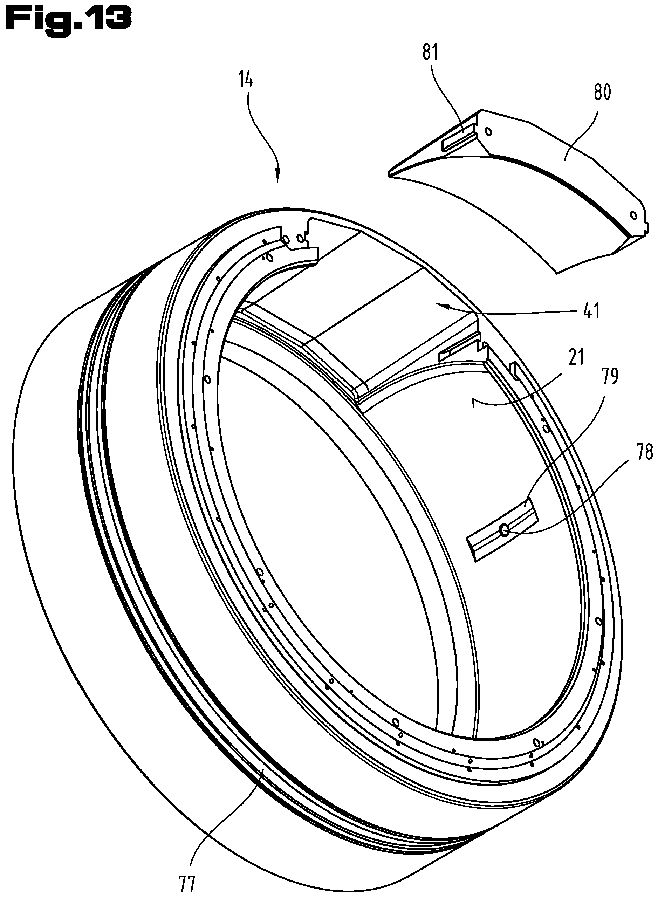

Wie besonderes gut aus Fig. 13 ersichtlich, kann vorgesehen sein, dass ein Füllelement 80 ausgebildet ist, welches zum Einsetzen in die Entnahmeöffnung 41 des äußeren Ringelementes 14 dient. Das Füllelement 80 kann im eingesetzten Zustand die Gegenfläche 21 komplettieren oder zumindest teilweise komplettieren. Dies bringt verbesserte Gleiteigenschaften mit sich.

Weiters kann vorgesehen sein, dass das Füllelement 80 mittels einer formschlüssigen Verbindung 81, insbesondere mittels einer Verbindungsnut, mit dem äußeren Ringelement 14 gekoppelt sein. Weiters kann vorgesehen sein, dass das Füllelement 80 mittels eines nicht dargestellten Sicherungselementes in seiner Position gesichert wird.

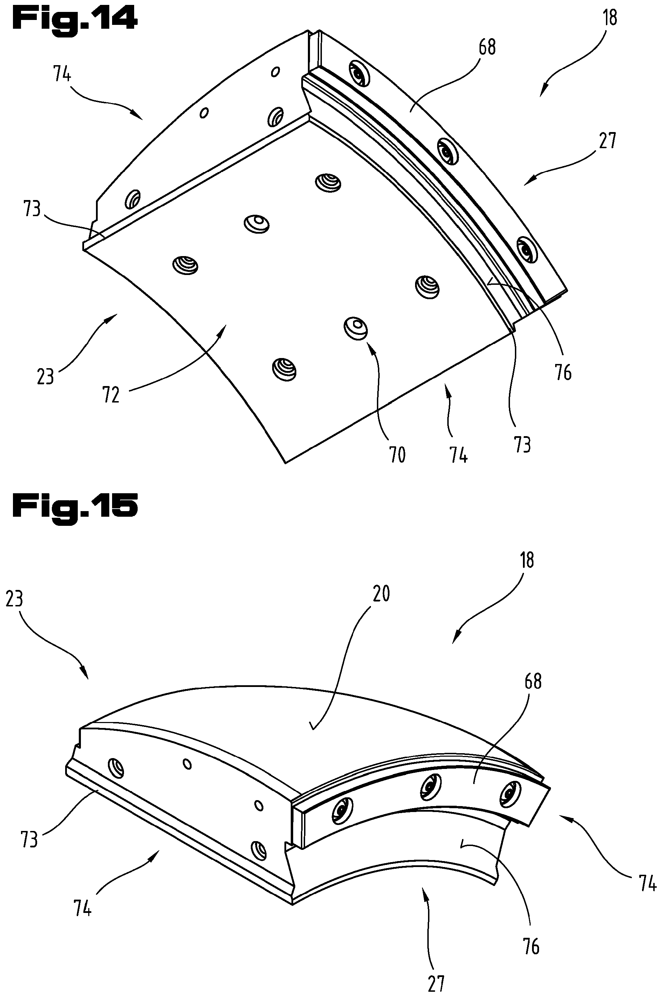

In den Figuren 14 bis 16 ist in verschiedenen perspektivischen Darstellungen eine Detailansicht des Gleitlagerpads 18 aus dem dritten Ausführungsbeispiel der Gleitlagerung 9 gezeigt, wobei wiederum für gleiche Teile gleiche Bezugszeichen bzw. Bauteilbezeichnungen wie in den vorangegangenen Figuren 1 bis 13 verwendet werden. Um unnötige Wiederholungen zu vermeiden, wird auf die detaillierte Beschreibung in den vorangegangenen Figuren 1 bis 13 hingewiesen bzw. Bezug genommen.

Wie aus den Figuren 14 bis 16 ersichtlich, kann vorgesehen sein, dass das Anlaufringsegment 68 durch drei Befestigungsmittel mit der zweiten Stirnseite 27 des Gleitlagerpads 18 gekoppelt ist.

Auch die Abstandhalter 73 sind in den Figuren 14 bis 16 gut ersichtlich.

Wie aus Fig. 14 besonders gut ersichtlich, kann vorgesehen sein, dass an der Innenseite 72 des Gleitlagerpads 18 eine Aufnahme 70 zum formschlüssigen Verbinden mit einer Hebevorrichtung ausgebildet ist.

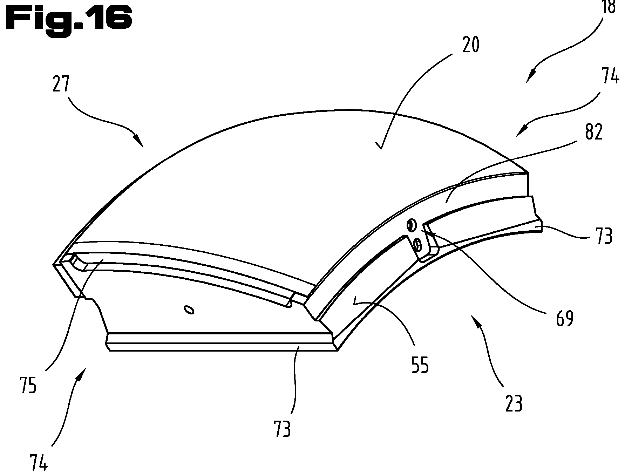

Wie aus Fig. 16 ersichtlich, kann vorgesehen sein, dass an der ersten Stirnseite 23 des Gleitlagerpads 18 ein Formelement 69, insbesondere ein Gewindeloch, ausgebildet ist, welches zur Aufnahme eines Verbindungselementes dient. Mittels des Formelementes 69 kann das Gleitlagerpad 18 mit einer Gleitlagerpadwechselvorrichtung gekoppelt werden.

Weiters kann vorgesehen, dass im Bereich des Formelementes 69 eine Ausnehmung 82 ausgebildet ist, welche in Zusammenwirken mit dem Formelement 69 zur Kopplung des Gleitlagerpads 18 mit der Gleitlagerpadwechselvorrichtung dient.

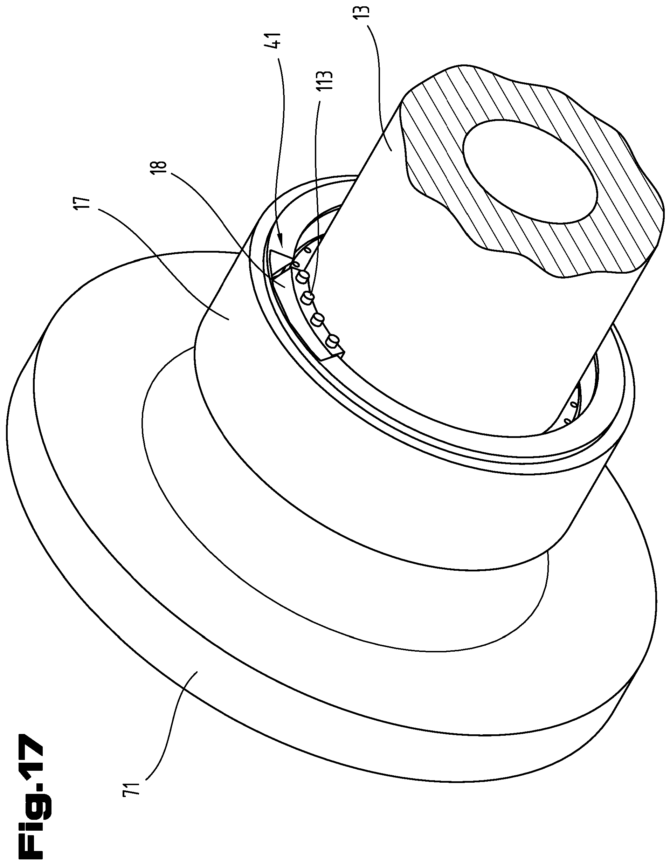

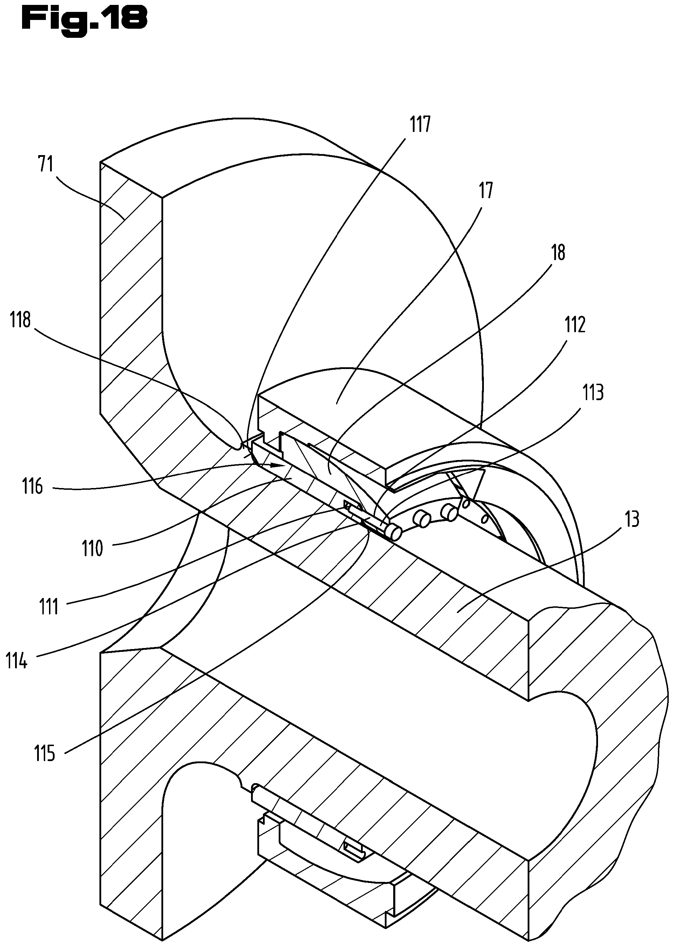

In den Figuren 17 und 18 ist eine weitere und gegebenenfalls für sich eigenständige vierte Ausführungsform der Gleitlagerung 9 gezeigt, wobei wiederum für gleiche Teile gleiche Bezugszeichen bzw. Bauteilbezeichnungen wie in den vorangegangenen Figuren 1 bis 16 verwendet werden. Um unnötige Wiederholungen zu vermeiden, wird auf die detaillierte Beschreibung in den vorangegangenen Figuren 1 bis 16 hingewiesen bzw. Bezug genommen.

In den Figuren 17 und 18 ist der Einfachheit halber nur ein einzelnes Gleitlagerpad 18 dargestellt, wobei jedoch, wie in den vorherigen Ausführungsbeispielen auch, mehrere der Gleitlagerpads 18 gleichmäßig über den Umfang verteilt angeordnet sein können.

Wie aus Fig. 18 ersichtlich, kann vorgesehen sein, dass am inneren Ringelement 13 ein Gleitlagerpadaufnahmering 110 angeordnet ist, welcher zur Aufnahme der einzelnen Gleitlagerpads 18 dient.

Insbesondere kann vorgesehen sein, dass die einzelnen Gleitlagerpads 18 an deren Innenseite 72 einen Absatz 114 aufweisen. Der Absatz 114 kann eine Anlagefläche ausbilden, sodass das Gleitlagerpad 18 im Bereich des Absatzes 114 an einer ersten Stirnseite 115 des Gleitlagerpadaufnahmeringes 110 anliegen kann. Dadurch kann das Gleitlagerpad 18 in Axialrichtung relativ zum Gleitlagerpadaufnahmering 110 positioniert werden.

Weiters kann vorgesehen sein, dass der Absatz 114 eine Ausnehmung 116 begrenzt, welche an der Innenseite 72 des Gleitlagerpads 18 ausgebildet ist. Die Ausnehmung 116 kann sich ausgehend von der zweiten Stirnseite 27 des Gleitlagerpads 18 bis zum Absatz 114 erstrecken. Die Ausnehmung 116 bzw. der Absatz 114 können rotationssymmetrisch ausgebildet sein.

Insbesondere kann vorgesehen sein, dass im verbauten Zustand des Gleitlagerpads 18 der Gleitlagerpadaufnahmering 110 zumindest teilweise in der Ausnehmung 116 des Gleitlagerpads 18 aufgenommen ist.

Weiters kann vorgesehen sein, dass an der ersten Stirnseite 115 des Gleitlagerpadaufnahmeringes 110 mehrere Gewindebohrungen 111 ausgebildet sind. Mit den Gewindebohrungen 111 korrespondierend können in den Gleitlagerpads 18 jeweils eine, insbesondere mehrere Durchgangslöcher 112 ausgebildet sein.

Weiters können durch die Durchgangslöcher 112 Befestigungsschrauben 113 geführt sein, welche in die Gewindebohrungen 111 eingeschraubt sein können und somit zur Befestigung der Gleitlagerpads 18 am Gleitlagerpadaufnahmering 110 dienen können.

Wie aus Fig. 18 weiters ersichtlich, kann vorgesehen sein, dass eine zweite Stirnseite 117 des Gleitlagerpadaufnahmeringes 110 an einem Wellenwulst 118 anliegt. Dadurch kann der Gleitlagerpadaufnahmering 110 axial an dem inneren Ringelement 13 positioniert sein.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Windkraftanlage | 31 | Übergangsabschnitt |
| 2 | Gondel | 32 | Übergangsradius |
| 3 | Turm | 33 | Abstand |
| 4 | Gondelgehäuse | 34 | Axialerstreckung Gleitlagerpad |
| 5 | Rotor | 35 | Axialstirnseite Lagerbock |
| 6 | Rotornabe | 36 | Deckel |
| 7 | Rotorblatt | 37 | Schmierölreservoir |
| 8 | Rotorlagerung | 38 | Schmieröl |
| 9 | Gleitlagerung | 39 | Durchgangsöffnung |
| 10 | Radialkraft | 40 | Dichtung |
| 11 | Axialkraft | 41 | Entnahmeöffnung |
| 12 | Kippmoment | 42 | erste Stirnseite äußeres Ringelement |
| 13 | inneres Ringelement | | |
| 14 | äußeres Ringelement | 43 | zweite Stirnseite äußeres Ringelement |
| 15 | Gleitlagerelement | | |
| 16 | Rotorwelle | 44 | Öleinzug |
| 17 | Lagerbock | 45 | erster Entnahmeöffnungsbereich |
| 18 | Gleitlagerpad | 46 | zweiter Entnahmeöffnungsbereich |
| 19 | Rotationsachse | 47 | Umfangserstreckung Entnahmeöffnung |
| 20 | Lagerfläche | | |
| 21 | Gegenfläche | 48 | Umfangserstreckung Gleitlagerpad |
| 22 | Innenseite | | |
| 23 | erste Stirnseite | 49 | Wellenmutter |
| 24 | erster Durchmesser | 50 | Axialsicherungselement-aufnahme |
| 25 | Scheitelpunkt | | |
| 26 | Durchmesser Scheitelpunkt | 51 | Axialsicherungselement |
| 27 | zweite Stirnseite | 52 | Befestigungsschraube |
| 28 | zweiter Durchmesser | 53 | Axialstirnseite Axialsicherungselement |
| 29 | Kugelkalottenabschnitt | | |
| 30 | Kugelkalottenradius | | |
| 54 | Keilfläche Axialsicherungsele-ment | 86 | |
| | | 87 | |
| 55 | erste Gegenkeilfläche | 88 | |
| 56 | Axialanschlagring | 89 | |
| 57 | Keilfläche Axialanschlagring | 90 | |
| 58 | Verdrehsicherungselement | 91 | |
| 59 | Lauffläche Wellenmutter | 92 | |
| 60 | Lauffläche Axialanschlagring | 93 | |
| 61 | zweiter Deckle | 94 | |
| 62 | Axialanschlag | 95 | |
| 63 | Ausnehmung | 96 | |
| 64 | Anschlagnase | 97 | |
| 65 | Nut | 98 | |
| 66 | Trapezförmige Nut | 99 | |
| 67 | Nutstein | 100 | |
| 68 | Anlaufringsegment | 101 | |
| 69 | Formelement Gleitlagerpad | 102 | |
| 70 | Aufnahme für Hebevorrichtung | 103 | |
| 71 | Rotorwellenflansch | 104 | |
| 72 | Innenseite | 105 | |
| 73 | Abstandhalter | 106 | |
| 74 | Umfangsseite | 107 | |
| 75 | Schmieröltransportnut | 108 | |
| 76 | zweite Gegenkeilfläche | 109 | |
| 77 | Schmierölverteilungsnut | 110 | Gleitlagerpadaufnahmering |
| 78 | Schmierölbohrung | 111 | Gewindebohrung |
| 79 | Öltasche | 112 | Durchgangsloch |
| 80 | Füllelement | 113 | Befestigungsschraube |
| 81 | formschlüssige Verbindung | 114 | Absatz |
| 82 | Ausnehmung | 115 | erste Stirnseite Gleitlagerpadauf- nahmering |
| 83 | | | |
| 84 | | 116 | Ausnehmung |
| 85 | | | |
| 117 | zweite Stirnseite Gleitlagerpad-aufnahmering | | |
| 118 | Wellenwulst | | |

## Patentansprüche

1. Gleitlagerung (9) umfassend:
- ein inneres Ringelement (13);
- ein äußeres Ringelement (14);
- zumindest ein Gleitlagerelement (15), welches zwischen dem inneren Ringelement (13) und dem äußeren Ringelement (14) angeordnet ist,
wobei eine Lagerfläche (20) des Gleitlagerelementes (15) und eine Gegenfläche (21) des äußeren Ringelements (14) aneinander anliegen,
wobei das Gleitlagerelement (15) zumindest zwei Gleitlagerpads (18) umfasst, wobei die einzelnen Gleitlagerpads (18) jeweils zumindest in einem Teilbereich eine in Axialrichtung gesehen gewölbte Lagerfläche (20) aufweisen,
**dadurch gekennzeichnet, dass**
im äußeren Ringelement (14) eine Entnahmeöffnung (41) ausgebildet ist, welche ausgehend von einer ersten Stirnseite (42) des äußeren Ringelementes (14) die Gegenfläche (21) des äußeren Ringelements (14) unterbricht.

2. Gleitlagerung (9) nach Anspruch 1, **dadurch gekennzeichnet, dass** die einzelnen Gleitlagerpads (18) in einem Kugelkalottenabschnitt (29) die Grundform einer Kugelkalotte mit einem Kugelkalottenradius (30) aufweisen und in einem Übergangsabschnitt (31) einen Übergangsradius (32) aufweisen.

3. Gleitlagerung (9) nach Anspruch 2, **dadurch gekennzeichnet, dass** sich der Kugelkalottenabschnitt (29) bis zu einem Scheitelpunkt (25) erstreckt und der Übergangsabschnitt (31) im Scheitelpunkt (25) an den Kugelkalottenabschnitt (29) anschließt.

4. Gleitlagerung (9) nach einem der Ansprüche 2 bis 3, **dadurch gekennzeichnet, dass** der Scheitelpunkt (25) in einem Abstand (33) von einer zweiten Stirnseite (27) des Gleitlagerpads (18) angeordnet ist, wobei der Abstand (33) zwischen 1% und 49%, insbesondere zwischen 5% und 35%, bevorzugt zwischen 10% und 25% einer Axialerstreckung (34) des Gleitlagerpads (18) beträgt.

5. Gleitlagerung (9) nach Anspruch 1, **dadurch gekennzeichnet, dass** die Entnahmeöffnung (41) eine Umfangserstreckung (47) aufweist und dass die Gleitlagerpads (18) jeweils eine Umfangserstreckung (48) aufweisen, wobei die Umfangserstreckung (48) der Gleitlagerpads (18) zwischen 60% und 99,9%, insbesondere zwischen 80% und 99%, bevorzugt zwischen 90% und 98% der Umfangserstreckung (47) der Entnahmeöffnung (41) beträgt.

6. Gleitlagerung (9) nach einem der Ansprüche 1 oder 5, **dadurch gekennzeichnet, dass** die Entnahmeöffnung (41) sich zur ersten Stirnseite (42) hin radial aufweitend ausgebildet ist.

7. Gleitlagerung (9) nach einem der vorhergehenden Ansprüche, **dadurch gekennzeichnet, dass** ein Gleitlagerpadaufnahmering (110) ausgebildet ist, welcher zur Befestigung der Gleitlagerpads (18) dient, wobei der Gleitlagerpadaufnahmering (110) am inneren Ringelement (13) aufgenommen ist.

8. Gleitlagerung (9) nach Anspruch 7, **dadurch gekennzeichnet, dass** der Gleitlagerpadaufnahmering (110) auf das innere Ringelement (13) aufgeschrumpft ist.

9. Gleitlagerung (9) nach Anspruch 7 oder 8, **dadurch gekennzeichnet, dass** im Gleitlagerpadaufnahmering (110) mehrere Gewindebohrungen (111) ausgebildet sind, welche in Axialrichtung des Gleitlagerpadaufnahmeringes (110) angeordnet sind und zur Aufnahme von Befestigungsschrauben (113) dienen, wobei in den Gleitlagerpads (18) Durchgangslöcher ausgebildet sind, durch welche die Befestigungsschrauben (113) gesteckt sind, um die Gleitlagerpads (18) mittels der Befestigungsschrauben (113) am Gleitlagerpadaufnahmering (110) zu klemmen.

10. Gleitlagerung (9) nach Anspruch 9, **dadurch gekennzeichnet, dass** die Gleitlagerpads (18) an deren Innenseite (72) einen Absatz (114) aufweisen, welcher an einer ersten Stirnseite (115) des Gleitlagerpadaufnahmeringes (110) anliegt, wobei die Durchgangslöcher (112) im Bereich des Absatzes (114) angeordnet sind.

11. Gleitlagerung (9) nach einem der vorhergehenden Ansprüche, **dadurch gekennzeichnet, dass** ein Lagerbock (17) ausgebildet ist, in welchem das äußere Ringelement (14) aufgenommen ist, wobei zumindest an einer Axialstirnseite (35) des Lagerbockes (17) ein Deckel (36) ausgebildet ist, wobei im Deckel (36) integriert oder an den Deckel (36) angeschlossen ein Schmierölreservoir (37) ausgebildet ist.

12. Gleitlagerung (9) nach einem der vorhergehenden Ansprüche, **dadurch gekennzeichnet, dass** an der ersten Stirnseite (23) des Gleitlagerpads (18) ein Formelement (69), insbesondere ein Gewinde, ausgebildet ist, welches zur Aufnahme eines Verbindungselementes dient.

13. Gleitlagerung (9) nach einem der vorhergehenden Ansprüche, **dadurch gekennzeichnet, dass** an einer zweiten Stirnseite (27) des Gleitlagerpads (18) ein Anlaufringsegment (68) angeordnet ist.

14. Gleitlagerung (9) nach einem der vorhergehenden Ansprüche, **dadurch gekennzeichnet, dass** in Umfangsrichtung gesehen zwischen den einzelnen Gleitlagerpads (18) Abstandhalter (73) angeordnet sind.

15. Gleitlagerung (9) nach einem der vorhergehenden Ansprüche, **dadurch gekennzeichnet, dass** an einer ersten Umfangsseite (74) des Gleitlagerpads (18) im Bereich der Lagerfläche (20) eine Schmieröltransportnut (75) ausgebildet ist.

16. Gleitlagerung (9) nach einem der vorhergehenden Ansprüche, **dadurch gekennzeichnet, dass** im Gleitlagerpad (18) an dessen Innenseite (72) eine Aufnahme (70) für eine Hebevorrichtung ausgebildet ist.

17. Verfahren zum Wechseln eines Gleitlagerpads (18) einer Gleitlagerung (9) nach Anspruch 1, umfassend die Verfahrensschritte:
- Bewegen des zu wechselnden Gleitlagerpads (18) zu der im äußeren Ringelement (14) ausgebildeten Entnahmeöffnung (41);
- Lösen eines Axialsicherungselementes (51) des zu wechselnden Gleitlagerpads (18);
- Axiales Entfernen des zu wechselnden Gleitlagerpads (18) durch die Entnahmeöffnung (41);
- Axiales Einsetzen eines neuen Gleitlagerpads (18) durch die Entnahmeöffnung (41);
- Fixieren des neuen Gleitlagerpads (18) mittels des Axialsicherungselementes (51).

18. Gondel (2) für eine Windkraftanlage (1), die Gondel (2) umfassend:
- ein Gondelgehäuse (4);
- eine Rotorwelle (16);
- eine Rotornabe (6), welche an der Rotorwelle (16) angeordnet ist;
- eine Rotorlagerung (8) zur Lagerung der Rotorwelle (16) am Gondelgehäuse (4), **dadurch gekennzeichnet, dass** die Rotorlagerung (8) eine Gleitlagerung (9) nach einem der Ansprüche 1 bis 16 umfasst.

19. Gondel (2) nach Anspruch 18, **dadurch gekennzeichnet, dass** die Rotorlagerung (8) einen Lagerbock (17) umfasst, in welchem das äußere Ringelement (14) aufgenommen ist, wobei der Lagerbock (17) einen Axialanschlag (62) für das äußere Ringelement (14) aufweist, wobei der Axialanschlag (62) an einer der Rotornabe (6) abgewandten Axialstirnseite (35) des Lagerbockes (17) ausgebildet ist.

20. Gondel (2) nach Anspruch 19, **dadurch gekennzeichnet, dass** die erste Stirnseite (42) des äußeren Ringelementes (14) an der zur Rotornabe (6) abgewandten Seite des Lagerbockes (17) ausgebildet ist.

21. Gondel (2) nach Anspruch 20, **dadurch gekennzeichnet, dass** der Axialanschlag (62) im Bereich der Entnahmeöffnung (41) des äußeren Ringelementes (14) eine Ausnehmung (63) aufweist, welche mit der Entnahmeöffnung (41) korrespondiert.

## Claims

1. A slide bearing arrangement (9), comprising:
- an inner ring element (13);
- an outer ring element (14);
- at least one slide bearing element (15), which is arranged between the inner ring element (13) and the outer ring element (14),
wherein a bearing surface (20) of the slide bearing element (15) and a mating surface (21) of the outer ring element (14) rest against each other,
wherein the slide bearing element (15) comprises at least two slide bearing pads (18), wherein the individual slide bearing pads (18) each have a bearing surface (20) that is cambered, viewed in an axial direction, in at least one sub-region,
**characterized in that**
a removal opening (41) is formed in the outer ring element (14), which removal opening (41) interrupts the mating surface (21) of the outer ring element (14), starting from a first front end (42) of the outer ring element (14).

2. The slide bearing arrangement (9) according to claim 1, **characterized in that** the individual slide bearing pads (18) have the basic form of a spherical cap with a spherical cap radius (30) in a spherical cap section (29) and have a transition radius (32) in a transition section (31).

3. The slide bearing arrangement (9) according to claim 2, **characterized in that** the spherical cap section (29) extends up to an apex (25) and the transition section (31) adjoins the spherical cap section (29) at the apex (25).

4. The slide bearing arrangement (9) according to any one of the claims 2 to 3, **characterized in that** the apex (25) is arranged at a distance (33) from a second front end (27) of the slide bearing pad (18), wherein the distance (33) is between 1% and 49%, in particular between 5% and 35%, preferably between 10% and 25%, of an axial extension (34) of the slide bearing pad (18).

5. The slide bearing arrangement (9) according to claim 1, **characterized in that** the removal opening (41) has a circumferential extension (47) and that the slide bearing pads (18) each have a circumferential extension (48), wherein the circumferential extension (48) of the slide bearing pads (18) is between 60% and 99.9%, in particular between 80% and 99%, preferably between 90% and 98%, of the circumferential extension (47) of the removal opening (41).

6. The slide bearing arrangement (9) according to any one of the claims 1 or 5, **characterized in that** the removal opening (41) is configured so as to widen radially towards the first front end (42).

7. The slide bearing arrangement (9) according to any one of the preceding claims, **characterized in that** a slide bearing pad reception ring (110) is formed, which serves to affix the slide bearing pads (18), wherein the slide bearing pad reception ring (110) is received on the inner ring element (13).

8. The slide bearing arrangement (9) according to claim 7, **characterized in that** the slide bearing pad reception ring (110) is shrunk onto the inner ring element (13).

9. The slide bearing arrangement (9) according to claim 7 or 8, **characterized in that** multiple tapped holes (111) are formed in the slide bearing pad reception ring (110), which tapped holes (111) are arranged in an axial direction of the slide bearing pad reception ring (110) and serve to receive fastening screws (113), wherein pass-through holes are formed in the slide bearing pads (18), through which pass-through holes the fastening screws (113) are plugged in order to clamp the slide bearing pads (18) on the slide bearing pad reception ring (110) by means of the fastening screws (113).

10. The slide bearing arrangement (9) according to claim 9, **characterized in that** the slide bearing pads (18) have a shoulder (114) on their inner face (72), which shoulder (114) rests against a first front end (115) of the slide bearing pad reception ring (110), wherein the pass-through holes (112) are arranged in the region of the shoulder (114).

11. The slide bearing arrangement (9) according to any one of the preceding claims, **characterized in that** a bearing block (17) is formed, in which the outer ring element (14) is received, wherein a cover (36) is formed on at least one axial front end (35) of the bearing block (17), wherein a lubricating oil reservoir (37) is configured so as to be integrated in the cover (36) or adjoined to the cover (36).

12. The slide bearing arrangement (9) according to any one of the preceding claims, **characterized in that** a form element (69), in particular a thread, is formed on the first front end (23) of the slide bearing pad (18), which form element (69) serves to receive a connection element.

13. The slide bearing arrangement (9) according to any one of the preceding claims, **characterized in that** a thrust ring segment (68) is arranged on a second front end (27) of the slide bearing pad (18).

14. The slide bearing arrangement (9) according to any one of the preceding claims, **characterized in that** spacers (73) are arranged between the individual slide bearing pads (18), viewed in a circumferential direction.

15. The slide bearing arrangement (9) according to any one of the preceding claims, **characterized in that** a lubricating oil transport groove (75) is formed on a first circumferential face (74) of the slide bearing pad (18) in the region of the bearing surface (20).

16. The slide bearing arrangement (9) according to any one of the preceding claims, **characterized in that** a reception (70) for a lifting device is formed in the slide bearing pad (18), on its inner face (72).

17. A method for changing a slide bearing pad (18) of a slide bearing arrangement (9) according to claim 1, comprising the method steps:
- moving the slide bearing pad (18) to be changed to the removal opening (41) formed in the outer ring element (14);
- releasing an axial securing element (51) of the slide bearing pad (18) to be changed;
- axially removing the slide bearing pad (18) to be changed through the removal opening (41);
- axially inserting a new slide bearing pad (18) through the removal opening (41);
- fixing the new slide bearing pad (18) by means of the axial securing element (51).

18. A nacelle (2) for a wind turbine (1), the nacelle (2) comprising:
- a nacelle housing (4);
- a rotor shaft (16);
- a rotor hub (6), which is arranged on the rotor shaft (16);
- a rotor bearing arrangement (8) for mounting the rotor shaft (16) on the nacelle housing (4), **characterized in that** the rotor bearing arrangement (8) comprises a slide bearing arrangement (9) according to any one of the claims 1 to 16.

19. The nacelle (2) according to claim 18, **characterized in that** the rotor bearing arrangement (8) comprises a bearing block (17), in which the outer ring element (14) is received, wherein the bearing block (17) has an axial stop (62) for the outer ring element (14), wherein the axial stop (62) is formed on an axial front end (35) of the bearing block (17) facing away from the rotor hub (6).

20. The nacelle (2) according to claim 19, **characterized in that** the first front end (42) of the outer ring element (14) is formed on the end of the bearing block (17) facing away from the rotor hub (6).

21. The nacelle (2) according to claim 20, **characterized in that** the axial stop (62) has a recess (63) in the region of the removal opening (41) of the outer ring element (14), which recess (63) corresponds with the removal opening (41).

## Revendications

1. Palier lisse (9) comprenant :
- un élément annulaire intérieur (13) ;
- un élément annulaire extérieur (14) ;
- au moins un élément de palier lisse (15), lequel est disposé entre l'élément annulaire intérieur (13) et l'élément annulaire extérieur (14) ;
dans lequel une surface de palier (20) de l'élément de palier lisse (15) et une contre-face (21) de l'élément annulaire extérieur (14) sont en contact l'une avec l'autre ;
dans lequel l'élément de palier lisse (15) comprend au moins deux patins de palier lisse (18), dans lequel les patins de palier lisse (18) individuels présentent chacun, au moins dans une partie de zone, une surface de palier (20) bombée vue dans la direction axiale ; **caractérisé en ce que** :
une ouverture d'extraction (41) est formée dans l'élément annulaire extérieur (14), laquelle, partant d'une première face frontale (42) de l'élément annulaire extérieur (14), interrompt la contre-face (21) de l'élément annulaire extérieur (14).

2. Palier lisse (9) selon la revendication 1, **caractérisé en ce que** les patins de palier lisse (18) individuels présentent une forme de base de calotte sphérique avec un rayon de calotte sphérique (30) dans une section de calotte sphérique (29) et présentent un rayon de transition (32) dans une section de transition (31).

3. Palier lisse (9) selon la revendication 2, **caractérisé en ce que** la section de calotte sphérique (29) s'étend jusqu'à un sommet (25) et la section de transition (31) se raccorde à la section de calotte sphérique (29) au sommet (25).

4. Palier lisse (9) selon l'une des revendications 2 à 3, **caractérisé en ce que** le sommet (25) est disposé à une distance (33) d'une deuxième face frontale (27) du patin de palier lisse (18), dans lequel la distance (33) est comprise entre 1 % et 49 %, en particulier entre 5 % et 35 %, de préférence entre 10 % et 25 % d'une extension axiale (34) du patin de palier lisse (18).

5. Palier lisse (9) selon la revendication 1, **caractérisé en ce que** l'ouverture d'extraction (41) présente une extension circonférentielle (47) et **en ce que** les patins de palier lisse (18) présentent chacun une extension circonférentielle (48), dans lequel l'extension circonférentielle (48) des patins de palier lisse (18) est comprise entre 60 % et 99,9 %, en particulier entre 80 % et 99 %, de préférence entre 90 % et 98 % de l'extension circonférentielle (47) de l'ouverture d'extraction (41).

6. Palier lisse (9) selon l'une des revendications 1 ou 5, **caractérisé en ce que** l'ouverture d'extraction (41) est formée de façon à s'élargir radialement vers la première face frontale (42).

7. Palier lisse (9) selon l'une des revendications précédentes, **caractérisé en ce qu'**un anneau de réception de patins de palier lisse (110) est formé, lequel sert à la fixation des patins de palier lisse (18), l'anneau de réception de patins de palier lisse (110) étant reçu sur l'élément annulaire intérieur (13).

8. Palier lisse (9) selon la revendication 7, **caractérisé en ce que** l'anneau de réception de patins de palier lisse (110) est rétreint sur l'élément annulaire intérieur (13).

9. Palier lisse (9) selon la revendication 7 ou 8, **caractérisé en ce que** plusieurs trous filetés (111) sont formés dans l'anneau de réception de patins de palier lisse (110), lesquels sont disposés dans la direction axiale de l'anneau de réception de patins de palier lisse (110) et servent à la réception de vis de fixation (113), dans lequel des trous traversants sont réalisés dans les patins de palier lisse (18), à travers lesquels les vis de fixation (113) sont insérées pour serrer les patins de palier lisse (18) au moyen des vis de fixation (113) sur l'anneau de réception de patins de palier lisse (110).

10. Palier lisse (9) selon la revendication 9, **caractérisé en ce que** les patins de palier lisse (18) présentent un épaulement (114) sur leur côté intérieur (72), lequel s'appuie sur une première face frontale (115) de l'anneau de réception de patins de palier lisse (110), dans lequel les trous traversants (112) sont disposés au niveau de l'épaulement (114).

11. Palier lisse (9) selon l'une des revendications précédentes, **caractérisé en ce qu'**un support de palier (17) est formé, dans lequel l'élément annulaire extérieur (14) est reçu, dans lequel un couvercle (36) est formé au moins sur une face frontale axiale (35) du support de palier (17), dans lequel un réservoir d'huile de lubrification (37) est intégré dans le couvercle (36) ou raccordé au couvercle (36).

12. Palier lisse (9) selon l'une des revendications précédentes, **caractérisé en ce qu'**un élément de forme (69), en particulier un filetage, est formé sur la première face frontale (23) du patin de palier lisse (18), lequel sert à la réception d'un élément de connexion.

13. Palier lisse (9) selon l'une des revendications précédentes, **caractérisé en ce qu'**un segment d'anneau de butée (68) est disposé sur une deuxième face frontale (27) du patin de palier lisse (18).

14. Palier lisse (9) selon l'une des revendications précédentes, **caractérisé en ce que** des entretoises (73) sont disposées entre les patins de palier lisse (18) individuels vus dans la direction circonférentielle.

15. Palier lisse (9) selon l'une des revendications précédentes, **caractérisé en ce qu'**une rainure de transport d'huile de lubrification (75) est formée sur une première face circonférentielle (74) du patin de palier lisse (18) au niveau de la surface de palier (20).

16. Palier lisse (9) selon l'une des revendications précédentes, **caractérisé en ce qu'**une réception (70) pour un dispositif de levage est formée dans le patin de palier lisse (18) sur son côté intérieur (72).

17. Procédé de remplacement d'un patin de palier lisse (18) d'un palier lisse (9) selon la revendication 1, comprenant les étapes de procédé suivantes :
- déplacement du patin de palier lisse (18) à remplacer vers une ouverture d'extraction (41) formée dans l'élément annulaire extérieur (14) ;
- desserrage d'un élément de sécurité axial (51) du patin de palier lisse (18) à remplacer ;
- retrait axial du patin de palier lisse (18) à remplacer par l'ouverture d'extraction (41) ;
- insertion axiale d'un nouveau patin de palier lisse (18) par l'ouverture d'extraction (41) ;
- fixation du nouveau patin de palier lisse (18) au moyen de l'élément de sécurité axial (51).

18. Nacelle (2) pour une éolienne (1), la nacelle (2) comprenant :
- un carter de nacelle (4) ;
- un arbre de rotor (16) ;
- un moyeu de rotor (6), lequel est disposé sur l'arbre de rotor (16) ;
- un palier de rotor (8) pour le support de l'arbre de rotor (16) sur le carter de nacelle (4), **caractérisée en ce que** le palier de rotor (8) comprend un palier lisse (9) selon l'une des revendications 1 à 16.

19. Nacelle (2) selon la revendication 18, **caractérisée en ce que** le palier de rotor (8) comprend un support de palier (17), dans lequel l'élément annulaire extérieur (14) est reçu, dans lequel le support de palier (17) présente une butée axiale (62) pour l'élément annulaire extérieur (14), dans lequel la butée axiale (62) est formée sur une face frontale axiale (35) du support de palier (17) opposée au moyeu de rotor (6).

20. Nacelle (2) selon la revendication 19, **caractérisée en ce que** la première face frontale (42) de l'élément annulaire extérieur (14) est réalisée sur le côté du support de palier (17) opposé au moyeu de rotor (6).

21. Nacelle (2) selon la revendication 20, **caractérisée en ce que** la butée axiale (62) présente un évidement (63) au niveau de l'ouverture d'extraction (41) de l'élément annulaire extérieur (14), lequel correspond à l'ouverture d'extraction (41).
